# EUROPÄISCHE PATENTSCHRIFT

(11) **EP 3 531 819 B1**
(45) Veröffentlichungstag und Bekanntmachung des Hinweises auf die Patenterteilung: **24.03.2021**
(21) Anmeldenummer: 17787416.1
(22) Anmeldetag: 23.10.2017
(51) Int. Cl.: A01D 75/18, A01F 15/10, A01D 90/04

(54) **SCHNEIDMESSER-ÜBERLASTSICHERUNG**
CUTTING BLADE OVERLOAD PROTECTION
DISPOSITIF DE SÉCURITÉ CONTRE LA SURCHARGE DE LAME DE COUPE

(30) Priorität: 27.10.2016 DE 102016120528; 13.07.2017 DE 202017104191 U
(43) Veröffentlichungstag der Anmeldung: 04.09.2019
(60) Teilanmeldung: 21152615.7
(73) Patentinhaber: B. Strautmann & Söhne GmbH u. Co. KG, 49196 Bad Laer (DE)
(72) Erfinder: TEWES-KAMPELMANN, Andreas, 49196 Bad Laer (DE)
(74) Vertreter: Dr. Träger & Strautmann PAe PartG mbB
(86) Internationale Anmeldenummer: PCT/EP2017/077001
(87) Internationale Veröffentlichungsnummer: WO 2018/077801

(56) Entgegenhaltungen:
- EP-A1- 0 028 395
- EP-A1- 2 910 105
- DE-B- 1 257 473
- DE-U1- 9 105 451
- DE-U1- 20 319 680
- GB-A- 2 095 638

## Beschreibung

Die Erfindung betrifft einen Kniehebelmechanismus umfassend zwei um eine Kniehebel-Drehachse schwenkbar aneinander gekoppelte Kniehebel, die bei Überschreiten einer vordefinierten, auf den Kniehebelmechanismus einwirkenden, Kraft aus einer Arbeitsposition in eine Ruheposition bewegbar sind.

Die Erfindung betrifft weiterhin eine Schneidmesser-Überlastsicherung für ein Schneidwerk einer Erntemaschine für Halm- und Blattgut, umfassend wenigstens ein um eine Schneidmesser-Drehachse schwenkbares Schneidmesser, welches mit einem solchen Kniehebelmechanismus verbunden ist. Der Kniehebelmechanismus umfasst zwei um eine Kniehebel-Drehachse schwenkbar aneinander gekoppelte Kniehebel welche bei Überschreiten einer vordefinierten Kraft das Schneidmesser aus einer Arbeitsposition in eine Ruheposition bewegen. Die vordefinierte Kraft wirkt auf den Kniehebelmechanismus und wird verursacht von einem um die Schneidmesser-Drehachse anliegenden Drehmoment. Dieses Drehmoment wiederum wird verursacht durch die im Arbeitseinsatz der Erntemaschine vom Erntegut und gegebenenfalls einem im Erntegut vorhandenen Fremdkörper auf das Schneidmesser ausgeübten Kräfte.

Die Erfindung betrifft weiterhin eine mit wenigstens einer solchen Schneidmesser-Überlastsicherung beziehungsweise einem solchen Kniehebelmechanismus ausgerüstete Erntemaschine.

Unter einem Kniehebelmechanismus ist eine Anordnung zweier einarmiger, durch ein Gelenk (Knie) miteinander verbundener Hebel zu verstehen, die an ihren Enden ebenfalls gelenkig gelagert sind. Unter der Kniehebel-Drehachse wird die gemeinsame, im Knie befindliche, Drehachse der beiden Hebel verstanden.

Aus DE 203 19 680 U1 ist eine Schneidmesser-Überlastsicherung für ein Schneidwerk einer Erntemaschine für Halm- und Blattgut bekannt, bei welcher der Kniehebelmechanismus mit zwei um eine Kniehebel-Drehachse schwenkbar aneinander gekoppelten Kniehebeln verbunden ist. Bei Überschreiten einer vordefinieren Kraft wird ein an den Kniebelmechanismus gekoppeltes Schneidmesser aus einer Arbeitsposition in eine Ruheposition bewegt. In Arbeitsposition weisen die Achslinien der beiden Kniehebel einen geringen Winkel zueinander auf. Bei Überschreiten der vordefinierten Kraft knickt der Kniehebel-Mechanismus ein und der Winkel der Kniehebel-Achslinien vergrößert sich. Aus dem in Arbeitsposition zunächst kleine Winkel resultiert ein kurzer Hebelarm, der eine relativ große Kraft erfordert um das Einknicken des Kniehebelmechanismus zu bewirken. Ohne einen zumindest minimalen Winkel zwischen den beiden Kniehebel-Achslinien wäre ein Einknicken des Kniehebelmechanismus unabhängig von der Größe der einwirkenden Kraft nicht möglich.

Aus DE 91 05 451 U1 ist eine Schneidmesser-Überlastsicherung für ein Schneidwerk einer Erntemaschine bekannt, bei der der Kniehebelmechanismus in Schneidmesser-Arbeitsstellung ebenfalls einen kleinen effektiven Hebelarm für eine zum Ausrücken des Schneidmessers erforderliche Kraft bildet.

Auch aus EP 0 028 395 A1 ist eine Schneidmesser-Überlastsicherung mit Kniehebelmechanismus und kleinen effektiven Hebelarm in Arbeitsstellung bekannt. Um eine schnelle und sichere Rückstellung eines ausgerückten Schneidmessers zu bewirken kann eine Feder vorgesehen sein, die eine mit zunehmendem Ausschwenken des Schneidmessers zunehmende Rückstellkraft bewirkt.

GB 2 095 638 A offenbart ebenfalls eine Schneidmesser-Überlastsicherung mit einer Messersicherung, bei welcher eine Feder nach Ausschwenken eines Schneidmessers aus der Arbeitsposition eine Rückstellkraft bewirkt.

Aus DE 12 57 473 B ist ein Schneidwerk mit einem Kniehebelmechanismus bekannt, bei dem die beiden Kniehebel in Arbeitsposition des Schneidmessers eine Sperrposition zur Fixierung des Schneidmessers bilden. Ein Ausschwenken des Schneidmessers im Arbeitseinsatz ist nicht vorgesehen. Der Kniehebelmechanismus ist dazu vorgesehen, um das Schneidmesse mittels eines manuell zu betätigenden Hebels bei Bedarf in eine Ruheposition zu schwenken.

Aus EP 2 910 105 B1 ist eine Schneidmesser-Überlastsicherung mit einem Kniehebelmechanismus bekannt, bei welcher die Hebelanordnung in eine Stützstellung das Schneidmesser in einer Schneidposition gegen eine vorbestimmte Vorspannkraft abstützt. Bei Überschreiten dieser Vorspannkraft durch eine Überlast ist das Schneidmesser aus der Stützstellung, und damit aus der Schneidposition, herausstellbar. Bei dieser Schneidmesser-Überlastsicherung ist die Hebelanordnung als Kniehebelmechanismus mit zwei Kniehebeln ausgebildet, die über ein Knickgelenk an ihren Längsenden schwenkbar miteinander verbunden sind. Das Knickgelenk ist in einer minimal gebeugten Stellung von nur wenig unter 180°, die in EP 2 910 105 B1 als "Gestrecktstellung der Kniehebel" bezeichnet wird, unter die Vorspannkraft realisierender Vorspannung auf Anschlag stellbar. Hierdurch ergibt sich eine Stützstellung, aus welcher die Kniehebel durch Einknicken des Kniehebelmechanismus herausstellbar sind, um das Ausweichen des Schneidmessers aus der Schneidposition zuzulassen. Das Einknicken erfolgt gegen die Vorspannung vom Anschlag weg im Knickgelenk.

Aus der minimalen Beugung der Kniehebel resultiert ein kurzer Hebelarm, der das Schneidmesser gegen die durch die Förderung von Erntegut ausgeübte Last abstützt. Ohne die minimale Beugung bzw. den hierdurch resultierenden Hebel lägen die drei Gelenke des Kniehebelmechanismus auf einer Linie, so dass eine auf das Schneidmesser einwirkende Last den Kniehebelmechanismus nicht einknicken ließe sondern in einer Blockadestellung arretieren würde.

Der in EP 2 910 105 B1 vorgesehene sehr kleine Hebelarm bei minimaler Beugung der Kniehebel bewirkt, dass zur Schneidposition des Schneidmessers hin eine relativ große Vorspannkraft bereitgestellt werden kann. Bei Überschreiten dieser Vorspannkraft beginnt das Schneidmesser sich aus der Schneidposition heraus zu bewegen und die Kniehebel beginnen einzuknicken. Durch das zusätzliche Einknicken der Kniehebel vergrößern sich der Hebelarm und damit die gegen die Vorspannkraft wirkende Last. Der Kniehebel knickt weiter, bzw. vollständig ein und schwenkt das Schneidmesser aus der Schneidposition heraus.

Nachteilig an dieser Hebelanordnung ist, dass sich nach Auslösen der Messersicherung der Kraftbedarf für das weitere Ausschwenken zwar reduziert, durch die zur Erzeugung der Vorspannkraft eingesetzte Vorspann-Feder jedoch während des kompletten Ausschwenkvorgangs eine der Auslöselast entgegen wirkende Rückstellkraft auf das Schneidmesser ausgeübt wird. Hierdurch können Fremdkörper Schäden am Schneidmesser verursachen, die sich nicht auf die Erstkontakt-Stelle von Fremdkörper und Schneidmesser beschränken, sondern über einen größeren Bereich der Schneide erstrecken.

Aufgabe der Erfindung ist es, den unter bestimmten Bedingungen eintretenden Selbsthemmungseffekt eines Kniehebelsystems zur Ausbildung einer Arretierungsstellung zu nutzen und Mittel bereitzustellen, mit denen die Selbsthemmung überwunden und der Kniehebel über einen Totpunkt hinaus bewegbar ist. Eine weitere Aufgabe der Erfindung ist es, eine Schneidmesser-Überlastsicherung mit einem solchen Kniehebelmechanismus vorzuschlagen um einen verbesserten Schutz gegen Beschädigungen des Schneidmessers zu ermöglichen.

Diese Aufgabe wird gelöst durch einen Kniehebelmechanismus mit den Merkmalen des Anspruchs 1, welcher somit einen Anschlag und ein Federelement umfasst und bei dem Anschlag und Federelement so zusammenwirken, dass bei Überschreiten einer vordefinierten Kraft die Kniehebel-Drehachse über einen Totpunkt bewegt wird und die Position der Kniehebel aus einer ersten Knickstellung in eine zweite Knickstellung wechselt.

Die Erfindung wird weiterhin gelöst durch eine Schneidmesser-Überlastsicherung mit den Merkmalen des Anspruchs 2.

Unter einem Kniehebelmechanismus wird ein System aus zwei aneinandergereihten und über ein gemeinsames Gelenk aneinander gekoppelten Kniehebeln verstanden. Dieses gemeinsame Gelenk wird im Folgenden auch als Kniehebel-Drehgelenk oder Kniegelenk bezeichnet. Zusätzlich zu dem gemeinsame Kniegelenk weisen die beiden Kniehebel, die im Folgenden als erster und zweiter Kniehebel bezeichnet werden, an ihren äußeren Enden jeweils ein weiteres Gelenk auf, die als äußeres Gelenk des ersten Kniehebels und äußeres Gelenk des zweiten Kniehebels bezeichnet werden.

Die Erfindung wendet einen an sich bekannten Kniehebelmechanismus auf eine völlig andere Art an, als die aus dem Stand der Technik bekannte Vorrichtung. Der Kniehebel wird erfindungsgemäß nicht nur dazu genutzt, um bei kleinem Hebelarm eine große Kraft zu übertragen. Der erfindungsgemäße Kniehebelmechanismus nutzt den unter bestimmten Bedingungen eintretenden Selbsthemmungseffekt eines Kniehebelsystems zur Ausbildung einer Arretierungsstellung aus und stellt Mittel bereit, mit denen die Selbsthemmung überwunden und der Kniehebelmechanismus über einen Totpunkt hinaus bewegt werden kann. Im Ergebnis kann dadurch ein mit einer solchen Überlastsicherung ausgerüstetes Schneidmesser bei Einwirken einer vordefinierten Kraft aus der Arbeitsposition im Schneidkanal in eine Ruheposition ausweichen.

Unter einem Totpunkt wird eine Position verstanden, in dem sich der Kniehebelmechanismus in einem labilen Gleichgewichtssystem befindet. Wesentlich für dieses labile Gleichgewichtssystem ist, dass im Kniegelenk des Kniehebelmechanismus keine in eine der beiden systembedingt möglichen Knickrichtungen wirkende Knickkraft wirkt oder etwaige im Kniegelenk wirkende Knickkräfte einander aufheben. Die beiden möglichen Knickrichtungen können auch als Andrück-Knickrichtung und Ausweich-Knickrichtung bezeichnet werden. Die Andrück-Knickrichtung ist diejenige Richtung, in der der Kniehebelmechanismus gegen einen Anschlag gedrückt und das Schneidmesser somit in Arbeitsposition gehalten wird. Die Ausweich-Knickrichtung ist diejenige Knickrichtung, in die der Kniehebelmechanismus bei Auslösen der Schneidmesser-Überlastsicherung einknickt um sodann seine Ruheposition einzunehmen.

Bei dem erfindungsgemäßen System wird eine vom Schneidmesser auf den Kniehebelmechanismus übertragene Kraftresultierende FR auf einen der beiden Kniehebel - und damit auf den Kniehebelmechanismus insgesamt - ausgeübt. Die auf das Schneidmesser einwirkende Kraft umfasst die im Arbeitseinsatz vom Erntegut auf die Schneide ausgeübte Belastung. Diese Belastung steigt an, wenn sich im Erntegut ein Fremdkörper befindet und dieser gegen das Schneidmesser gedrückt wird. Die insgesamt auf das Schneidmesser einwirkende Kraft wird als Kraftresultierende FR in den Kniehebelmechanismus übertragen. Dabei wird die Kraft FR in einen Kniehebel eingeleitet und von diesem auf das Kniegelenk übertragen. Die Kraft FR wird als Kraft FR' in das Kniegelenk weitergeleitet und kann in zwei Komponenten zerlegt werden:
- einem Druck- oder Kompressionskraftanteil FK, der in Richtung des zweiten Kniehebels wirkt und
- eine Quer- oder Knickkraftkomponente FN, die das Bestreben hat, die beiden Kniehebel in die eine oder andere Richtung einknicken zu lassen.

Die Größe und die Richtung der im Kniegelenk wirkenden Knickkraft ist abhängig von der auf den Kniehebelmechanismus einwirkenden Kraft FR. Erfindungsgemäß sorgt die Knickkraft bei kleiner Kraft FR zunächst dafür, dass das Schneidmesser im Arbeitseinsatz in Arbeitsposition gehalten wird. Bei zunehmendem Druck auf das Schneidmesser ändert sich auch die auf den Kniehebelmechanismus einwirkende Kraft FR in ihrer Größe. Dadurch reduziert sich die Knickkraft, also die Kraft, die dafür verantwortlich ist, dass das Schneidmesser in Arbeitsposition gehalten wird. Bei einer vordefinierten Größe der Kraft FR, hat sich die Knickkraft auf Null reduziert und der Kniehebelmechanismus befindet sich in Totpunktlage. Diese vordefinierte Kraft in Totpunktlage wird im Folgenden als Kraft F1 bezeichnet. Ein weiteres Anwachsen der Kraft FR über die Kraft F1 hinaus bewirkt eine Umkehr der Knickkraft-Wirkrichtung und ein Auslösen der Schneidmesser-Überlastsicherung.

Bei einem als Stand der Technik bekannten einfachen Kniehebelmechanismus ohne zusätzliche Abstützung eines Kniehebels können die beiden über das Knie-Gelenk aneinander gekoppelten Kniehebel - bezogen auf eine Gestrecktstellung dieser beiden Kniehebel zueinander - grundsätzlich in zwei einander entgegengesetzte Richtungen eingeknickt werden. Ist der Kniehebelmechanismus insgesamt nur an zwei Punkten, nämlich dem äußeren Ende des ersten Kniehebels und dem äußeren Ende des zweiten Kniehebels, gelagert, so stellt die Gestrecktstellung der beiden Kniehebel eine Totpunktlage dar. Eine in den oberen oder unteren Anlenkpunkt eingeleitete und in Achsrichtung der in gestreckter Position befindlichen Kniehebel wirkende Kraft verursacht im Knie-Gelenk keine in Knickrichtung wirkende Querkraft. Die beiden Kniehebel knicken somit bei einem System ohne Abstützung in Gestrecktstellung weder in die eine, noch in die andere mögliche Knickrichtung ein.

Der erfindungsgemäße Kniehebelmechanismus umfasst eine zusätzlichen Abstützung wenigstens eines der beiden Kniehebel an einem für die Abstützung vorgesehenen Stützpunkt. Diese Abstützung lässt das Einknicken der beiden Kniehebel nur in eine Richtung, nämlich in die Ausweich-Knickrichtung, zu. Hierzu muss die im Kniegelenk wirkende Querkraft in Richtung der genannten Ausweich-Knickrichtung ausgerichtet sein. Wirkt die Querkraft entgegengesetzt, also in Andrück-Knickrichtung, wird durch diese Querkraft der Anpressdruck gegen den Anschlag ausgeübt und das Schneidmesser in Arbeitsposition gehalten.

Der Knickkraftanteil reduziert sich, weil sich durch die vom Kompressionsanteil bewirkte Komprimierung des in den Kniehebelmechanismus integrierten Federelementes und/oder die durch das Führungselement im Zusammenspiel mit der am Kniehebel vorgesehenen Schräge die Hebelposition ändert.

Hinsichtlich der im Kniegelenk wirkenden Kräfte sind bei diesem System grundsätzlich drei Zustände möglich:
- In einem ersten Zustand weist die im Kniegelenk wirkende Querkraft gegen die vorgesehene Ausweich-Knickrichtung. Der Kniehebelmechanismus hat das Bestreben, entgegen der vorgesehenen Ausweich-Knickrichtung einzuknicken, stützt sich jedoch gegen einen als Gegenlager vorgesehen Anschlag ab. Die im Kniegelenk wirkende Querkraft wird somit als Andrückkraft auf den Anschlag übertragen.
   Dieser erste Zustand kann in unterschiedlichen Positionen der Kniehebel zueinander realisiert sein. Die Stellung, in der sich die beiden Kniehebel im ersten Zustand befinden, wird als erste Knickstellung bezeichnet. Der Winkel zwischen den beiden Kniehebeln ist in der ersten Knickstellung größer als 180° (überstreckte Stellung).
- In einem zweiten Zustand ist keine im Kniegelenk wirkende Querkraft vorhanden. Vom Kniegelenk bzw. der dort wirkenden Kraft wird also keine zusätzliche Andrückkraft auf den Anschlag ausgeübt. Es ist aber auch keine in Knickrichtung wirkende Querkraft vorhanden. Der Kniehebelmechanismus befindet sich vielmehr in einem labilen Gleichgewichtssystem und damit in Totpunktlage.
- In einem dritten Zustand weist die im Kniegelenk wirkende Querkraft in die vorgesehene Ausweich-Knickrichtung. Der Kniehebelmechanismus hat das Bestreben, einzuknicken und knickt auch tatsächlich ein, da kein Anschlag vorhanden ist, gegen den sich die in Ausweich-Knickrichtung wirkende Querkraft abstützen könnte.
   Die Stellung, in der sich die beiden Kniehebel im dritten Zustand befinden, wird als zweite Knickstellung bezeichnet.

Bei der erfindungsgemäßen Schneidmesser-Überlastsicherung ist der Kniehebelmechanismus mittels des ersten Kniehebels an das Schneidmesser gekoppelt. Im Arbeitseinsatz wird Erntegut gegen das Schneidmesser gedrückt und von diesem geschnitten. Hierbei wird durch das Erntegut eine Kraft auf das Schneidmesser ausgeübt. Die auf das Schneidmesser einwirkende Kraft wird über den Koppelpunkt zwischen Schneidmesser und erstem Kniehebel auf den Kniehebelmechanismus in Form der bereits genannten resultierenden Kraft FR übertragen. Diese resultierende Kraft FR hat einen Kraftanteil, der im Knie-Gelenk in Achsrichtung des zweiten Kniehebels wirkt und einen weiteren Kraftanteil, der im Kniegelenk in Querrichtung (Andrück- oder Ausweich-Knickrichtung) wirkt.

Bei der erfindungsgemäßen Schneidmesser-Überlastsicherung ist die auf den Kniehebelmechanismus wirkende Kraft von der Größe der auf das Schneidmesser einwirkenden Kraft abhängig. Je größer die auf das Schneidmesser einwirkende Kraft ist, desto größer ist auch die im Kniehebelmechanismus wirkende resultierende Kraft FR.

In Totpunktlage wird die über den Kraftvektor zugeführte Kraft FR auf den Kniehebel selbst bzw. dessen Haltepunkt übertragen. Eine Ausweichbewegung der Hebel, bzw. deren Einknicken, ist ohne eine weitere äußere Einwirkung nicht möglich. Erst eine auf das System einwirkende Kraft, die nicht in Richtung des genannten Kraftvektors gerichtet ist, kann diesen Zustand ändern.

Werden die äußeren Gelenkpunkte der beiden Kniehebel miteinander verbunden, so kann bei einem Kniehebelsystem ohne Abstützung eine Totpunktlage nur dann ausgebildet werden, wenn das Kniegelenk genau auf dieser Verbindungslinie angeordnet ist. Das Kniegelenk bei einem Kniehebelsystem mit Abstützung kann somit - in Ausweich-Knickrichtung gesehen - vor der genannten Verbindungslinie liegen.

Bei einem Ausführungsbeispiel der Erfindung mit - in Ausweich-Knickrichtung gesehen - vor der Verbindungslinie angeordnetem Kniegelenk, weist der Kniehebelmechanismus der erfindungsgemäßen Vorrichtung somit bezogen auf die weiter oben genannten drei Zustände folgende Stellungen auf:
- In einer ersten Stellung (erste Knickstellung) ist das Knickgelenk überstreckt, das heißt: der Winkel zwischen den beiden Kniehebeln ist größer als 180°. Eine in Andrück-Knickrichtung wirkende Querkraft drückt den Kniehebelmechanismus gegen den vorgesehen Anschlag.
- In einer zweiten Stellung (Gestrecktstellung) sind alle drei Gelenke des Kniehebelmechanismus auf einer gemeinsamen Geraden angeordnet. Der Winkel zwischen den beiden Kniehebeln beträgt somit exakt 180°. Eine in den Kniehebelmechanismus eingeleitete Kraft weist keine Querkraftkomponente auf. Das System befindet sich in Totpunktlage.
- In einer dritten Stellung (zweite Knickstellung) ist der Winkel zwischen den Kniehebeln kleiner als 180°. Eine in Ausweich-Knickrichtung wirkende Querkraft bewirkt das Einknicken der beiden Kniehebel.

Das Schneidmesser kann zwei Positionen einnehmen: In Arbeitsposition befindet es sich innerhalb eines an einer Erntemaschine vorgesehenen Förderkanals und schneidet das von der Erntemaschine aufgenommen und mittels eines Förderrotors durch den Förderkanal geförderte Erntegut. Als Ruheposition wird eine Position bezeichnet, bei der das Schneidmesser vorzugsweise vollständig aus dem Förderkanal herausgeschwenkt ist und das Erntegut gar nicht oder kaum (bei nicht vollständig ausgeschenktem Schneidmesser) schneidet.

Bei der erfindungsgemäßen Vorrichtung wird das Schneidmesser somit vom Kniehebelmechanismus nicht durch eine Vorspannkraft in Arbeitsposition gehalten, sondern durch den vorhandenen Selbsthemmeffekt. Um den Selbsthemmeffekt aufzuheben, muss der Totpunkt überschritten werden, das heißt: die Kniehebel müssen aus der ersten Knickstellung über die Gestrecktstellung in die zweite Knickstellung bewegt werden. Die im Kniegelenk wirkende Querkraft muss hierzu ihre Wirkrichtung ändern. Diese Positionsänderung der Kniehebel und die Änderung der Kraftrichtung im Kniegelenk wird ermöglicht durch das erfindungsgemäße Zusammenwirken eines Führungselements mit einem Federelement. Das Führungselement wird gebildet durch einen Anschlag, der in Kontakt zu einem der beiden Kniehebel steht. Der Anschlag ist so konzipiert, dass er eine Führung für den Kniehebel darstellt, so dass der Kniehebel am Anschlag entlanggleiten oder rollen kann.

Hinsichtlich von Anschlag und Führung kann beispielsweise vorgesehen sein, dass die Trägerstruktur des Kniehebelmechanismus einen fixierten Bolzen aufweist, an dem sich ein Kniehebel mittels einer zu diesem Zweck der Abstützung vorgesehenen Führungsbahn abstützt. Die Führungsbahn bildet somit eine Art schiefe Ebene, bei Krafteinwirkung auf den Kniehebelmechanismus an dem Bolzen entlang gleiten kann. Umgekehrt ist ebenfalls möglich, dass eine fixierte Führungsbahn an die Trägerstruktur gekoppelt ist und der Kniehebel einen Zapfen oder Bolzen aufweist, der bei Krafteinwirkung an der fixierten Führungsbahn entlanggleitet.

Die Führungsbahn selbst kann sowohl gerade als auch ganz oder teilweise kurvenförmig sein. Eine ganz oder teilweise kurvenförmige Führungsbahn kann beispielsweise Vorteile hinsichtlich eines ruckfreien Ansprechens oder einer Steuerung der Ausrückgeschwindigkeit bieten.

Aus der auf das Schneidmesser einwirkenden Last resultiert ein auf den Kniehebelmechanismus einwirkender Kraftvektor, der teilweise - in Totpunktlage vollständig - in das Federelement eingeleitet wird. Durch die in das Federelement eingeleitet Kraft ändert sich dessen Länge. Die Längenänderung des Federelements bewirkt eine Positionsveränderung der Kniehebel und deren gemeinsamer Drehachse, wobei die Positionsveränderung durch das dafür vorgesehen Führungselement zwangsgesteuert ist. Kniehebelmechanismus und Federelement stützen sich gegen das Führungselement ab bis die beiden Kniehebel die Totpunktlage überschreiten bzw. überschritten haben.

Das Federelement kann in verschiedenen Ausführungsformen vorliegen. Wesentlich ist, dass das Federelement eine Längenänderung wenigstens eines der Elemente des Kniehebelmechanismus ermöglicht. Besonders bevorzugt ist dabei eine Ausführung, bei der wenigstens einer der beiden Kniehebel aus zwei Teilen besteht, die durch ein Federelement aneinander gekoppelt sind. Bei einer Krafteinleitung in Richtung des Federelements wird das Federelement somit komprimiert und der durch der Kniehebel verkürzt sich entsprechend. Der gleiche Effekt, nämlich eine Längenänderung kann auch mit anderen Mitteln als einem Kniehebel mit zusätzlichem Federelement erzielt werden.

Beispielsweise ist auch eine Ausführungsform möglich, bei der der Kniehebel ganz oder teilweise aus einem elastischen Material, beispielweise Hartgummi; besteht. Weiterhin ist es auch möglich, dass nicht der Kniehebel selbst, sondern eine Lagerstelle wenigstens eines der Kniehebelgelenke eine Längenänderung ermöglicht. Hierzu könnte in die Gelenkstelle eine elastische Buchse integriert sein, die sich bei Krafteinwirkung verformt. Die Längenänderung des Federelements erfolgt bei Krafteinwirkung so lange beziehungsweise so weit, bis die Kniehebeldrehachse, in ihrer Bewegung gesteuert durch das Führungselement, in die genannte Totpunktlage bewegt worden ist. Hierfür ist eine vordefinierte, beziehungsweise durch konstruktive Gestaltung der relevanten Elemente vordefinierbare Kraft F1 erforderlich.

Bei minimaler zusätzlicher Krafteinleitung wird eine so entstandene labile Position überwunden und der Totpunkt überschritten.

Nach Überschreiten des Totpunktes stützen Kniebelmechanismus und Federelement sich nicht mehr auf dem Führungselement ab. Aus der bis zu diesem Punkt in das Federelement eingeleiteten Kraft resultiert eine Vorspannung des Federelements, die nach Überschreiten der Totpunktlage nicht mehr abgestützt wird, sondern sich vielmehr schlagartig entlädt und die Kniehebel in die zweite Knickstellung einknicken lässt.

Von besonderem Vorteil ist hierbei, dass das Schneidmesser nur solange gegen die Überlastsicherung abgestützt wird, wie der Kniehebelmechanismus sich in überstreckter Stellung befindet. Ein im Erntegut befindlicher Fremdkörper, beispielsweise ein Stein, löst deshalb an einer Schneidkante eines Schneidmessers eine Art Einschlag aus. Das Federelement des Kniehebelmechanismus drückt somit nach Überwinden der Totpunktlage nicht gegen das Schneidmesser bzw. den vor dem Schneidmesser befindlichen Stein. Die Schneidkante insgesamt wird geschont und allenfalls in dem begrenzten Bereich der Einschlagstelle, bzw. der Erst-Kontaktierung von Schneidmesser und Stein beschädigt.

Weiterhin ist von Vorteil, dass das Einrücken des Schneidmessers aus der Ruheposition in die Arbeitsposition bei leerem Förderkanal weitgehend widerstandslos erfolgen kann. Es muss keine Feder gespannt bzw. vorgespannt werden, gegen die sich das Schneidmesser in Arbeitsposition abstützt. Es muss vielmehr lediglich die Drehachse des Kniehebelmechanismus aus der zweiten Knickposition über die Totpunktlage in die erste Knickposition überführt werden. Solange die Schwenkbewegung des Schneidmessers um seine Drehachse dabei nicht durch eine auf das Schneidmesser einwirkende Kraft, beispielsweise im Förderkanal befindliches Erntegut, behindert wird, müssen für die Schwenkbewegung lediglich systemimmanente Reibkräfte, beispielsweise in den Drehgelenken des Kniehebelmechanismus, überwunden werden.

In einer bevorzugten Ausführungsform ist die Position des Anschlags gegenüber dem Kniehebel einstellbar. Hierdurch ist auch die Kraft, bei der die Schneidmesser-Überlastsicherung auslöst, einstellbar. Durch die Position des Anschlags gegenüber dem Kniehebelmechanismus wird der Abstand der Kniehebel-Drehachse zur Totpunktlage definiert. Ist dieser Abstand klein, ist nur eine geringfügige Längenänderung des Federelements erforderlich, um bei einer auf das Schneidmesser einwirkenden Last den Kniehebel-Drehpunkt über den Totpunkt hinaus zu verschieben und die Messersicherung damit auszulösen. Umgekehrt ist bei großem Abstand eine große Längenänderung des Federelements und damit eine große Kraft zur Auslösung der Messersicherung erforderlich.

Durch die Einstellbarkeit des Anschlags ist es somit möglich, eine Kraft vorzudefinieren, bei der die Messersicherung auslöst. Hierdurch können Fertigungstoleranzen bei Herstellung der Messersicherung ausgeglichen werden, so dass die Überlastsicherung werksseitig beispielsweise so eingestellt werden kann, dass jede Einzel-Messersicherung bei einer gewünschten, vordefinierten, Kraft auslöst. Weiterhin kann der Auslösepunkt auch nachträglich noch neu eingestellt bzw. variiert werden, um das Überlastsicherung unterschiedlichen Ernteanforderungen anzupassen.

Für das Auslösen der erfindungsgemäßen Messersicherung ist grundsätzlich eine Relativbewegung des Anschlags gegenüber dem Kniehebelmechanismus erforderlich. Der Anschlag bildet während der Phase, in der der Kniehebelmechanismus bei Lasteinleitung aus der ersten Knickstellung in die Totpunktlage überführt wird, eine Führung für die Bewegung des Kniehebelmechanismus aus. Die Bewegung des Kniehebels in dieser Phase ist somit durch den als Führungselement dienenden Anschlag zwangsgesteuert.

In einer bevorzugten Ausführungsform umfasst der Kniehebelmechanismus einen Kniehebel mit einen Kontaktbereich, der als schiefe Ebene ausgebildet ist. Die schiefe Ebene des Kniehebels kann widerstandsarm am Anschlag entlanggleiten. Der Anschlag selbst und auch die Kontaktfläche können eine Beschichtung aufweisen, die den Verschleiß und/oder den Reibwiderstand reduziert. Zu den geeigneten Substanzen zählen beispielsweise schmierend wirkende Oxide, wie Titanoxid, und Molybdändisulfid. Der Anschlag kann zur Verbesserung der Gleiteigenschaften auch eine abgerundete Kontur aufweisen oder als Rolle ausgeführt sein.

In einer bevorzugten Ausführungsform umfasst wenigstens einer der Kniehebel zwei Einzelteilen, die durch das Federelement miteinander verbunden sind. Das Federelement ist dabei so in den Kniehebel integriert, dass es zwischen den beiden Einzelteilen des Kniehebels angeordnet ist, so dass eine Krafteinleitung in den Kniehebel die Länge des Kniehebels im Bereich zwischen seinen Drehpunkten verändert. Die Länge des Kniehebels ist somit von der Größe einer auf den Kniehebel, und damit auf das Federelement, einwirkenden Kraft abhängig. Die Längenänderung bewirkt, dass der sich gegen den Anschlag abstützende Kniehebel am Anschlag entlang gleitet und die Kniehebeldrehachse zwangsgesteuert aus der ersten Knickstellung in die Totpunktlage und minimal darüber hinaus bewegt wird.

Alternativ zu einer Ausführungsform, bei der das Federelement in einen Kniehebel integriert ist, kann es auch zwischen dem Schneidmesser und dem Kniehebel oder zwischen einem mit dem Kniehebel verbundenen Tragrahmen und dem Kniehebel angeordnet sein. Weiterhin ist es möglich, dass das Federelement im Gelenk selbst untergebracht ist, beispielsweise in Form einer elastischen Kunststoffbuchse, die auf einen Lagerbolzen gesteckt ist, der wiederum die Lagerung eines Kniehebels bildet: Wirkt eine Kraft auf eine solche Lagerstelle ein, so wird zunächst die elastische Kunststoffbuchse komprimiert und hierdurch eine Längenänderung bewirkt. Wesentlich ist, dass die Konstruktion so ausgeführt ist, dass eine Längenänderung des Federelements eine zwangsgesteuerte Verlagerung der Kniehebel-Drehachse über den Totpunkt hinaus ermöglicht.

In einer bevorzugten Ausführungsform ist als Federelement ein elastischer Kunststoffblock vorgesehen ist. Ein solcher Kunststoffblock ist verschleißarm. Federhärte und Federkennlinie können so vorgewählt werden, dass die für die Bewegung der Kniehebel-Drehachse über den Totpunkt erforderliche Längenänderung durch das ausgewählte Material realisiert werden kann. Besonders bevorzugt ist insofern die Verwendung von Polyurethan als Material für die Kunststofffeder.

Alternativ oder in Ergänzung zu einer Kunststofffeder ist aber auch der Einsatz einer Gummifeder, einer Spiral-Druckfeder oder Spiral-Zugfeder, einer Tellerfeder oder eines anderen Federelements möglich.

In einer weiteren Ausführungsform umfasst das Federelement wenigstens zwei Einzelfedern. Dies hat besonders dann Vorteile, wenn eine Kunststoff-Druckfeder auf engem Bauraum eingesetzt wird. Ein enger Bauraum ergibt sich dadurch, dass an den Schneidwerken, an denen die Messersicherung zum Einsatz kommt, häufig eine kurze Schnittlänge des Ernteguts gewünscht wird und eine Vielzahl von Schneidmesser deshalb eng nebeneinander angeordnet sind.

Da die Kunststoff-Druckfeder bei Beaufschlagung mit einer Druckkraft ausbaucht, ergeben sich Probleme, wenn der zwischen den Einzelmessern zur Verfügung stehende Bauraum für das Ausbauchen einer Einzelfeder nicht ausreicht. In diesem Fall kann der zum Ausbauchen des Federelements benötigte Bauraum dadurch reduziert werden, dass zwei oder mehr Druckfedern radial hintereinander und/oder auf einer gemeinsamen Achse übereinander angeordnet werden. Ein weiterer sich aus der Verwendung mehrerer Einzelfedern ergebender Vorteil liegt darin, dass dann, wenn die Federachse nicht mit der Achse des Kraftvektors übereinstimmt, die Federn so angeordnet werden können, dass das Einfedern ohne Ausbildung von in der Feder wirkenden Querkräften realisiert wird.

Für das Federelement kann eine Spanneirichtung vorgesehen sein um es mit einer Vorspannung zu beaufschlagen. Mittels dieser Vorspannung kann das Setzverhalten des Federelements kompensiert werden. Weiterhin gewährleistet die Vorspannung einen festen Einbau des Federelements im Kniehebelmechanismus und unterbindet Klappergeräusche. Die angesprochene Vorspannung des Federelements dient somit nicht dazu, die Schneidmesser-Überlastsicherung gegen eine auf das Schneidmesser einwirkende Überlast vorzuspannen.

Das Federelement kann an ein Führungsmittel gekoppelt sein um ein seitliches Ausbrechen des Federelementes unter Lasteinwirkung zu verhindern. Ein solches Führungsmittel ist insbesondere bei Verwendung einer Druckfeder als Federelement von Vorteil, da bei solchen Federn unter ungünstigen Bedingungen schon geringfügige auf die Feder einwirkende Querkräfte ein seitliches Ausweichen provozieren können.

In einer bevorzugten Ausführungsform umfasst die Schneidmesser-Überlastsicherung ein Rückstellmittel, welches das Schneidmesser aus der Ruheposition in die Arbeitsposition bewegt. Dieses Rückstellmittel dient dazu, die Kniehebel-Drehachse, und mit ihr den Kniehebel-Mechanismus und das Schneidmesser insgesamt, aus der zweiten Knickstellung über die Totpunktlage in die erste Knickstellung zurück zu verlagern. Für die Rückstellung des Schneidmessers aus der Ruheposition in die Arbeitsposition müssen etwaige im Förderkanal auf das Schneidmesser einwirkende Gegenkräfte sowie die im Kniehebelmechanismus vorhandenen Reibwiderstände überwunden werden. Ist der Förderkanal leer, beispielsweise bei Transportfahrten der Erntemaschine oder bei Unterbrechung des Erntevorgangs, ist für die Messer-Rückstellung nur die Überwindung der Reibwiderstände erforderlich. Als Rückstellmittel kann beispielsweise eine Feder oder ein auf das Kniehebel-Gelenk einwirkender Mechanismus vorgesehen sein, beispielsweise eine Nockenwelle, deren Nocke bei Drehung der Nockenwelle auf das Kniegelenk drücken und es aus der zweiten Knickstellung über die Totpunktlage in die erste Knickstellung verlagern. Bei dem Rückstellmittel kann es sich auch um ein Federelement aus einem elastischen Gummi oder Kunststoff, beispielsweise einem Gummi- oder Gewebeband handeln.

Besonders bevorzugt wird eine Ausführung, bei der als Rückstellmittel eine Spiralfeder oder eine Rollfeder vorgesehen ist. Eine solche Feder, die an ihrem einen Ende am Kniehebelmechanismus und an ihrem anderen Ende an einem gegenüber dem Kniehebelmechanismus festen Punkt, beispielsweise an der Trägerstruktur des Schneidrahmens, gelagert ist, wird beim Ausweichen des Schneidmessers aus der Arbeitsposition in die Ruheposition vorgespannt. Sobald die Rückstellkraft der Feder größer ist als die der Rückstellbewegung entgegenwirkende Kraft, wird das Schneidmesser automatisch aus der Ruheposition zurück in die Arbeitsposition im Förderkanal geschwenkt. Die Federkraft wird vorzugsweise so vorgewählt, dass sie lediglich etwas größer ist als die systemimmanenten Reibkräfte, so dass das Schneidmesser dann in den Förderkanal geschwenkt wird, wenn im Förderkanal keine oder nur eine geringe Kraft gegen das Messer drückt.

Da das Schneidmesser in Arbeitsposition durch die Selbsthemmung des Kniehebelmechanismus gehalten wird und nicht durch die Rückstellkraft des genannten Rückstellmittels und da nach Verlagerung der Kniehebel-Drehachse über die Totpunktlage zu diesem Zeitpunkt die Spannkraft des in den Kniehebelmechanismus integrierten Federelements wesentlich größer ist als die Federkraft des Rückstellmittels, erfolgt das Ausrücken des Schneidmesser trotz gleichzeitiger Spannung des Rückstellmittels schlagartig. Das Schneidmesser wird schneller aus dem Förderkanal gezogen, als der Fremdkörper, der das Ausrücken veranlasst hat, im Förderkanal weitergefördert und damit an der Schneidkante entlanggleiten kann. Der Effekt, dass der das Schneidmesser kontaktierende Fremdkörper am Schneidmesser lediglich eine Art Einschlag verursacht, nicht aber einen größeren Schneidenbereich schädigt, wird somit durch Einsatz einer Feder als Rückstellmittel nicht beeinträchtigt.

Das Schneidmesser ist zum einen drehbar an eine feststehende Trägerstruktur gekoppelt und gegenüber dieser Trägerstruktur um die Schneidmesser-Drehachse drehbar. Zum anderen ist es über ein Drehgelenk an den Kniehebelmechanismus gekoppelt. In einer bevorzugten Ausführungsform weisen die Lagerstellen von Schneidmesser-Drehachse und/oder Kniehebel-Drehgelenk ein vordefiniertes Spiel auf. Bei einer auf das Schneidmesser einwirkenden Kraft und einem hierdurch bedingten Drehmoment um die Schneidmesser-Drehachse wird somit zunächst etwaiges insbesondere im Bereich der genannten Gelenke vorhandenes Spiel zwischen den Bauteilen überwunden und die Bauteile werden an ihren jeweiligen Kontaktpunkten aneinandergepresst.

Bei entsprechend vorgewähltem Spiel an den Bauteilen leistet dieses Aneinanderpressen der der Bauteile einen Beitrag zur Änderung der Kraftresultierenden FR. Im Zusammenspiel mit der Kompression des in den Kniehebelmechanismus integrierten Federelements kann sich durch die Einleitung des Drehmoments M um die Schneidmesser-Drehachse die Größe und/oder Richtung der auf den Kniehebelmechanismus einwirkenden Kraftresultierenden FR verändern. Die Auswahl eines vordefinierten Spiels leistet somit einen Beitrag dazu, die für das Auslösen der Überlastsicherung vordefinierte Kraft F1 durch konstruktive Gestaltung der Bauteile zu realisieren.

Weiterhin wird die Aufgabe gelöst durch eine Erntemaschine für Halm- und Blattgut, umfassend wenigstens eine Schneidmesser-Überlastsicherung und/oder einen Kniehebelmechanismus in einer der beschriebenen Ausführungsformen.

Die Erfindung ist in einem Ausführungsbeispiel anhand der Zeichnung verdeutlicht. Die Figuren zeigen:
- Fig. 1: das Vorderteil einer Erntemaschine in einer Seitenansicht;
- Fig. 2: einen Teilbereich des Vorderteils aus Fig. 1 mit in Arbeitsposition befindlichem Schneidmesser und dem Kniehebelmechanismus in einer ersten Knickstellung;
- Fig. 3: den Kniehebelmechanismus aus Fig. 2, erste Knickstellung;
- Fig. 4: einen Teilbereich des Vorderteils aus Fig. 1 beim Ausrücken des Schneidmessers aus der Arbeitsposition, Kniehebelmechanismus in Totpunktlage;
- Fig. 5: den Kniehebelmechanismus aus Fig. 4, Totpunktlage;
- Fig. 6: einen Teilbereich des Vorderteils aus Fig. 1 mit in Ruheposition ausgerücktem Schneidmesser, Kniehebelmechanismus in einer zweiten Knickstellung;
- Fig. 7: den Kniehebelmechanismus aus Fig. 6, zweite Knickstellung;
- Fig. 8: Explosionsdarstellung der Kniehebel-Bauteile;
- Fig. 9: den Kniehebelmechanismus in einer Zusammenbau-Darstellung.
- Fig. 10: ein weiteres Beispiel einer Messersicherung mit gegen den Anschlag gedrücktem Kniehebelmechanismus, Schneidmesser in Arbeitsposition (erster Zustand);
- Fig. 11: die Messersicherung gemäß Fig. 10 mit, Kniehebelmechanismus in Totpunktstellung (2. Zustand);
- Fig. 12: die Messersicherung gemäß Fig. 10 und 11, Kniehebelmechanismus unmittelbar nach Überschreiten der Totpunktstellung (3. Zustand);
- Fig. 13: die Messersicherung gemäß der Figuren 10 bis 12, Kniehebelmechanismus komplett ausgerückt, Schneidmesser in Ruheposition.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

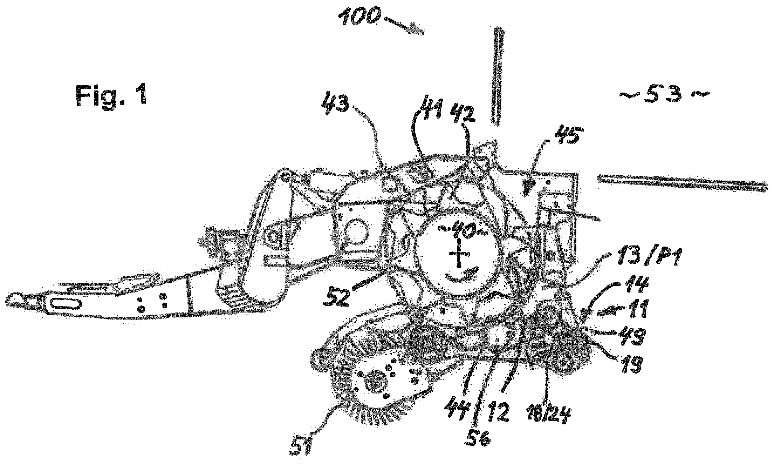

Fig. 1 zeigt das Vorderteil einer teilweise dargestellten Erntemaschine 100 in einer Seitendarstellung in Form einer schematischen Schnittdarstellung. Bei der Erntemaschine 100 handelt es sich um einen beispielhaft dargestellten Ladewagen, die erfindungsgemäße Schneidmesser-Überlastsicherung 10 ist aber auch an anderen Erntemaschinen für Halm- und Blattgut, insbesondere an Ballenpressen einsetzbar.

Die Erntemaschine 100 weist eine Pick-up 51 zur Aufnahme von Erntegut, beispielsweise Gras, auf. Das Erntegut (nicht dargestellt) wird von der Pick-up 51 einem Förderrotor 40 zugeführt, welcher aus einem Tragrohr 41 und darauf angebrachten Förderzinken 42 gebildet wird. Im dargestellten Ausführungsbeispiel bilden acht Förderzinken 42 einen Förderzinkenstern. Der Förderrotor 40 umfasst eine Vielzahl solcher axial zur Drehachse des Förderrotors 40 nebeneinander angeordneten Förderzinken-Sterne. In axialer Richtung liegen die Förderzinken 42 bzw. die Förderzinkensterne nicht aneinander an, sondern sind vielmehr voneinander beabstandet und bilden Spalten aus, durch die im Arbeitseinsatz Schneidmesser 13 geführt werden.

Die Förderzinken 42 weisen Förderzinkenspitzen 52 auf, die einen Hüllzylinder 43 des Förderrotors 40 definieren. Um einen Teil des Hüllzylinders 43 erstreckt sich eine Förderwanne 44. Zwischen dem Tragrohr 41 des Förderrotors 40 und der Förderwanne 44 ist so ein Förderkanal 45 ausgebildet. Das im Arbeitseinsatz von der rotierenden Pick-up 51 dem ebenfalls rotierenden Förderrotor 40 zugeführte Erntegut wird mittels der Förderzinken 42 durch den Förderkanal 45 einem sich an den Förderkanal 45 anschließendem Laderaum 53 der Erntemaschine 100 zugeführt.

Die Förderwanne 44 weist nebeneinander angeordnete, schlitzartige Aussparungen (nicht dargestellt) auf, durch die hindurch sich die Schneidmesser 13 in den Förderkanal 45 erstrecken und dort in die sich zwischen den Förderzinken befindlichen Spalten ragen. Bei Rotation des Förderrotors 40 werden die Förderzinken 42 somit an den Schneidmessern 13 entlanggeführt, wobei die Förderzinken 42 als Gegenschneiden für die feststehenden Schneidmesser 13 fungieren. Das den Förderkanal 45 passierende Erntegut wird von den Schneidmessern 13 geschnitten, wobei die Schnittlänge des Ernteguts durch den Abstand der Schneidmesser 13 zueinander definiert wird.

Die Schneidmesser 13 sind über Messerträger 54 an eine Trägerstruktur 55 bzw. einen Tragrahmen 31 gekoppelt und bilden gemeinsam ein um eine Drehachse 56 schwenkbar Schneidwerk 11 aus. Bei ausgeschwenktem Schneidwerk 11 befinden sich alle Schneidmesser 13 außerhalb des Förderkanals 45.

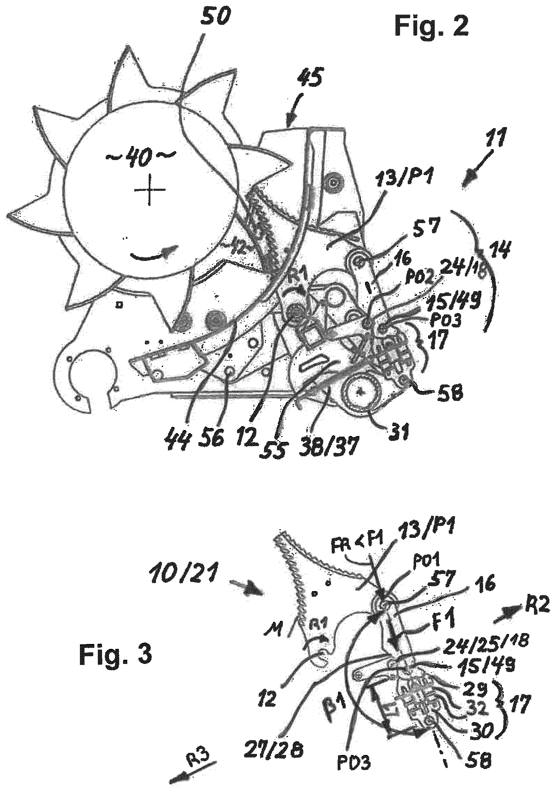

Die Schneidmesser 13 sind nicht nur gemeinsam mittels des Schneidwerks 11 aus dem Förderkanal 45 ein- und ausschwenkbar, sondern können auch einzeln um eine Schneidmesser-Drehachse 12 in, bzw. aus, dem Förderkanal 45 geschwenkt werden. Das Ausschwenken erfolgt in die in Fig. 2 dargestellte Richtung R2, das Einschwenken in die entgegengesetzte Richtung. Die in den Förderkanal 45 eingeschwenkte Position eines Schneidmessers 13 wird als Arbeitsposition P1 bezeichnet, die aus dem Förderkanal 45 ausgeschwenkte Position als Ruheposition P2.

Das Ausschwenken eines Schneidmessers 13 um die Schneidmesser-Drehachse 12 wird über einen Kniehebel-Mechanismus 14 gesteuert. Dieser Kniehebel-Mechanismus 14 beinhaltet die erfindungsgemäße Schneidmesser-Überlastsicherung 10. Die Funktionsweise der Überlastsicherung 10 ist in den Figuren 2 bis 7 in drei Momentaufnahmen an einem ersten Ausführungsbeispiel veranschaulicht.

Figur 2 zeigt einen Ausschnitt des Erntemaschinen-Vorderteils mit einem vollständig in den Förderkanal 45 eingetauchtem Schneidmesser 13. Das Schneidmesser 13 - und auch das ganze Schneidwerk 11 - befindet sich somit in Arbeitsposition P1. Zwischen dem Erntegut (nicht dargestellt) befindet sich ein Fremdkörper 50, beispielsweise ein Stein, im Förderkanal 45. Figur 2 zeigt den Moment, in dem der Fremdkörper 50 sich unmittelbar zwischen einem Förderzinken 42 und dem Schneidmesser 13 befindet.

In Figur 3 ist der in Figur 2 enthalten Kniehebelmechanismus 14 zur besseren Veranschaulichung freigestellt abgebildet. Die beiden Kniehebel 16 und 17 weisen ein gemeinsames Kniehebel-Drehgelenk 49 mit einer Kniehebel-Drehachse 15 auf. An seinem zweiten Ende ist der Kniehebel 16 über ein Drehgelenk 57 an das Schneidmesser 13 gekoppelt. Der Kniehebel 17 ist an seinem zweiten Ende über ein Drehgelenk 58 an die Trägerstruktur 55 gekoppelt und weist zwischen den Drehgelenken 49 und 58 eine Länge L1 auf.

Der Kniehebel 16 stützt sich gegen einen an der Trägerstruktur 55 angeordneten Anschlag 24 ab. Der Anschlag 24 weist eine abgerundete Kontur 25 auf und bildet ein Führungselement 18 für die Bewegung des Kniehebels 16. Die beiden Kniehebel 16 und 17 werden von einem Winkel ß1 umschlossen, der bei dem in den Figuren 2 bis 7 dargestellten ersten Ausführungsbeispiel größer als 180° ist. Diese Position des Kniehebelmechanismus wird im Folgenden als erste Knickstellung 21 bezeichnet.

Im Moment des Kontaktes des Fremdkörpers 50 mit dem Schneidmesser 13 baut sich durch die Rotation des Förderrotors 40 ein Drehmoment M um die Drehachse 12 des Schneidmessers 13 auf. Die auf das Messer ausgeübte Kraft wird auf die Bauteile des Kniehebel-Mechanismus übertragen. Das Drehmoment M überträgt somit die auf die Schneidmesser 13 einwirkende Kraft auf einen Kontaktpunkt P01 von Schneidmesser und Kniehebel 16 beziehungsweise Kniehebelmechanismus 14. Die Schneidmesser-Drehachse 12 ist ortsfest fixiert, der Kontaktpunkt P01 stellt eine Art Satellit zu der ortsfesten Drehachse 12 dar. Bei Übertragung der Kraft in den Punkt P01 wird etwaiges insbesondere im Bereich der Gelenke vorhandenes Spiel zwischen den Bauteilen überwunden und die Bauteile werden an ihren jeweiligen Kontaktpunkten aneinandergepresst. Aus dem Drehmoment um die Drehachse 12 resultiert somit ein Kraftvektor FR, der über das Drehgelenk 57 auf den Kniehebelmechanismus 14 übertragen wird.

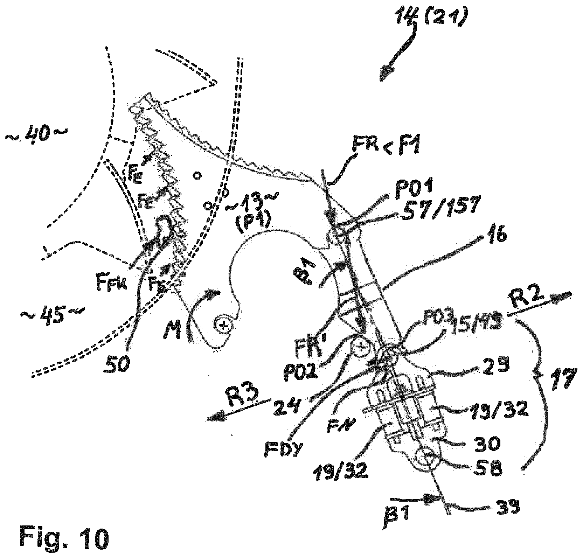

Da bei der in Fig. 3 bis Fig. 7 dargestellten Ausführungsform das Kniehebel-Drehgelenk 49 in Ausweich-Knickrichtung R2 gesehen vor der Verbindungslinie der Drehgelenke 57 und 58 liegt, ist der Winkel ß1 größer als 180°.Der Kniehebelmechanismus 14 kann nicht in die Ausweich-Knickrichtung R2 einknicken. Das um die Drehachse 12 anliegende Drehmoment M wird in Form einer Kraftresultierenden FR auf den im Bereich des Drehgelenks 57 befindlichen Kontaktpunkt P01 zwischen Schneidemesser 13 und Drehgelenk 57 übertragen. Der im Kontaktpunkt P03 anliegende Kraftvektor kann auch als Kraftvektor FR" bezeichnet werden. Analog hierzu wird ein auf den Kontaktpunkt P02 von Anschlag 24 und Kniehebel 16 verlagerter Kraftvektor FR als FR' bezeichnet. Die Kraft FR, und auch FR' bzw. FR" lässt sich in eine Teilkraft FN, die auf den Anschlag 24 übertragen wird und eine Teilkraft FK, die über das Kniehebel-Drehgelenk 49 auf den Kniehebel 17 übertragen wird (vgl. Fig. 10) zerlegen. Die Kraft FN kann auch als Knickkraft bezeichnet werden, da diese Kraft in Ausweich-Knickrichtung (Richtung R2) oder in Andrück-Knickrichtung (Richtung R3) wirkt.

Eine zur Rückholung des Schneidmessers aus der Ruheposition P1 in die Arbeitsposition P2 gegebenenfalls vorgesehene Spiralfeder 38 bleibt hierbei ohne Lasteinwirkung. Die erfindungsgemäße Messersicherung funktioniert auch ohne diese Spiralfeder 38. Zwar wird die Spiralfeder 38 beim Ausrücken des Schneidmessers 13 aus der Arbeitsposition P1 in die Ruheposition P2 vorgespannt, jedoch ist diese von der Spiralfeder 38 ausgeübte Rückstellkraft so klein, dass sie die Knickkraft FN und die für das Auslösen der Schneidmesser-Überlastsicherung 10 erforderliche Kraft nur unwesentlich beeinflusst.

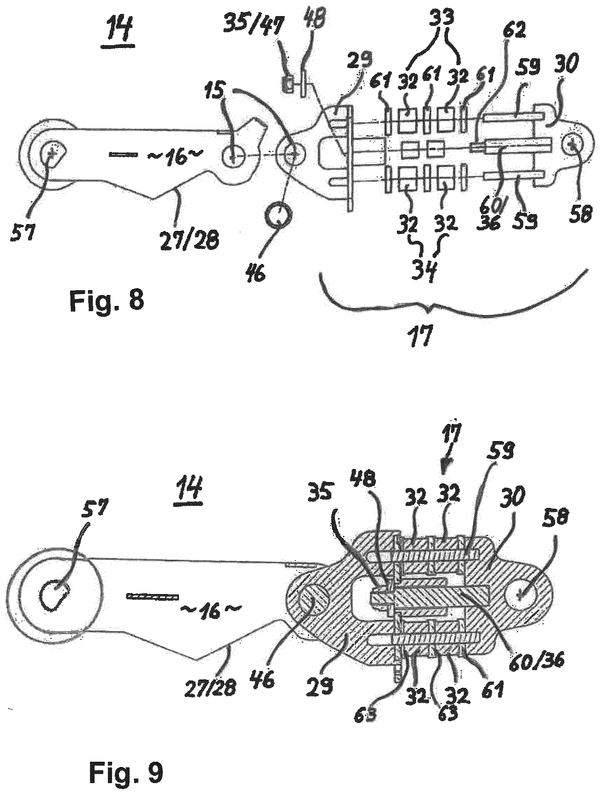

Der Kniehebelmechanismus 14 weist weiterhin ein Federelement 19 auf, das in den dargestellten Ausführungsbeispielen in den Kniehebel 17 integriert ist. Die beiden Kniehebel 16 und 17 sowie die zugehörigen Bauteile sind in Fig. 8 und Fig. 9 dargestellt. Der Kniehebel 16 umfasst die beiden Drehgelenke 49 und 57 sowie eine schiefe Ebene 28, die einen Kontaktbereich 27 für den Anschlag 24 ausbildet. Der Kniehebel 17 umfasst die beiden Einzelteile 29 und 30 sowie zwei äußere Feder-Haltebolzen 59 und einen mittleren Federführungsbolzen 60. Der Federführungsbolzen 60 bildet ein Führungsmittel 36, und verhindert ein seitliches Ausbrechen des Federelements 19 unter Lasteinwirkung.

In den dargestellten Ausführungsbeispielen sind für die beiden Feder-Haltebolzen 59 jeweils zwei zylindrische Kunststoffblöcke 32 vorgesehen, die mittels einer darin enthaltenen Bohrung auf die Feder-Haltebolzen 59 aufsteckbar sind. Zwei Kunststoffblöcke 32 bilden eine Einzelfeder 33 und zwei weitere Kunststoffblöcke 32 eine Einzelfeder 34. Weiterhin aufsteckbar sind drei Trennscheiben 61.

Die dargestellte Ausführungsform mit mehreren Feder-Haltebolzen 60 und jeweils zwei darauf aufsteckbaren Kunststoffblöcken 32 hat den Vorteil, dass bei Kompression des Federelements 19 nicht eine einzige Ausbauchung mit entsprechendem Bauraumbedarf ausgebildet wird. Vielmehr wird die Kompression auf alle Kunststoffblöcke 32 gleichmäßig übertragen und jeder einzelne Kunststoffblock 32 baucht für sich aus, wobei die einzelnen Ausbauchungen der vier im Ausführungseispiel vorgesehenen Kunststoffblöcke 32 wesentlich kleiner ist als die Ausbauchung eines - alternativ zu den vier Einzel-Kunststoffblöcken 32 einsetzbaren - größeren Einzelblocks. Damit die Kunststoffblöcke 32 kontrolliert im mittleren Bereich ausbauchen weisen die Trennscheiben 61 Vertiefungen 63 auf, die an die Enden der Kunststoffblöcke 32 angepasst sind. Im zusammengebauten Zustand sind die Kunststoffblöcke 32 in die Vertiefungen 63 eingesetzt und werden so in ihren Randbereichen abgestützt. Die Vertiefungen 63 können beispielsweise in die Trennscheiden 61 eingedreht oder eingeprägt sein.

Zusammengehalten wird der Kniehebel 17 indem der mit einem Gewinde 62 versehene Führungsbolzen 60 durch eine im Kniehebel-Einzelteil 29 vorgesehene Bohrung gesteckt und oberhalb der Bohrung nach Aufstecken eine Scheibe 48 mit einer Mutter 47 verschraubt wird. Führungsbolzen 60 und Mutter 47 bilden somit eine Spanneinrichtung 35. Je nachdem wie weit die Mutter 47 auf das Gewinde 62 des Führungsbolzens 60 aufgeschraubt wird, werden die Kunststoffblöcke 32 mehr oder weniger stark vorgespannt. Durch das Vorspannen der Kunststoffblöcke 32 kann das in Abhängigkeit vom ausgewählten Kunststoff mehr oder weniger starke Setzverhalten des Kunststoffes kompensiert werden. Weiterhin unterbindet die Vorspannung störende Klappergeräusche bei Transportfahrten der Erntemaschine 100.

Die Scheibe 48 kann zudem als Dämpfungselement ausgebildet sein um die bei Rückfederung des Federelements 19 aus einer gespannten Stellung in die Ausgangsstellung entstehenden Geräusche und System-Belastungen zu reduzieren.

Der Kniehebel 17 ist somit eine Baugruppe, in die das Federelement 19 integriert ist. Analog zum Kniehebel 16 weist auch der Kniehebel 17 zwei Drehgelenk auf, nämlich ein Drehgelenk 58 und - gemeinsam mit dem Kniehebel 16 - das Kniehebel-Drehgelenk 49. Die Kniehebel-Drehgelenke 49 der Kniehebel 16 und 17 sind durch einen Drehbolzen 46 aneinander gekoppelt und weisen die gemeinsame Kniehebel-Drehachse 15 auf.

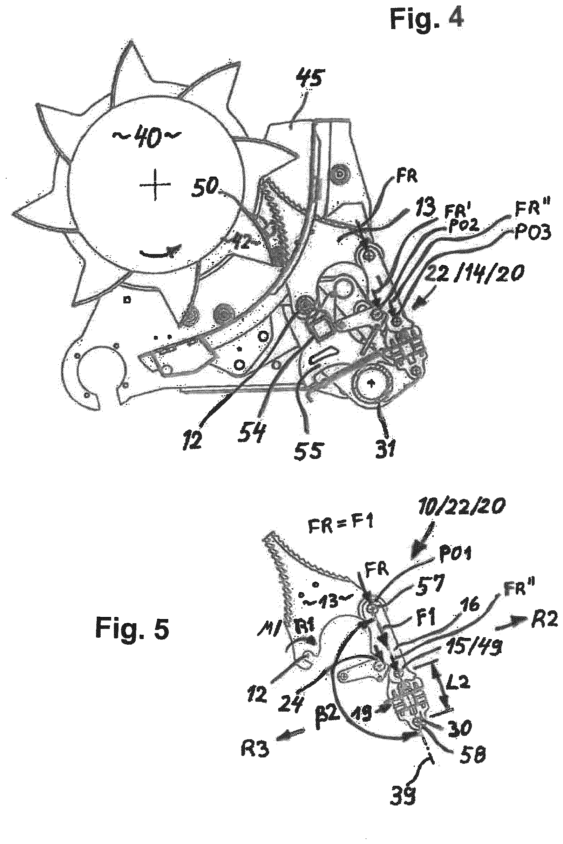

Die Figuren 4 bis 7 zeigen dasselbe Ausführungsbeispiel wie Figur 3. Figur 4 zeigt das Erntemaschinen-Vorderteil mit dem Kniehebelmechanismus 14 in seiner Gestrecktstellung 22, Figur 5 wiederum zeigt den freigestellten Kniehebelmechanismus aus Figur 4. Die drei Gelenke 49, 57 und 58 liegen bei diesem Ausführungsbeispiel auf einer Geraden 39. Der Winkel ß2 der beiden Kniehebel 16 und 17 beträgt 180°. Diese Lage stellt eine Totpunktlage 20 dar, in der die auf den Kniehebelmechanismus 14 einwirkende Kraft vollständig auf das Federelement 19 übertragen wird.
Wie insbesondere Figur 5 zeigt, hat die Kraft FR, bzw. deren Kraftanteil FK, das Federelement 19 und damit den Kniehebel 17 auf eine Länge L2 komprimiert. Durch die Kompression des Kniehebels 17 und die während der Kompression auf den Anschlag 24 einwirkende Teilkraft FK des Kraftvektors FR ist die Richtung des Kraftvektors FR und/oder der Kniehebel 16, gesteuert durch die schiefe Ebene 28 so bewegt worden, dass die Kniehebel-Drehachse 15 auf die Gerade 39 verlagert worden ist (vgl. Fig. 5). Anschlag 24 und schiefe Ebene 28 bilden somit eine Zwangsführung für die Verlagerung der Kniehebel-Drehachse 15 aus.

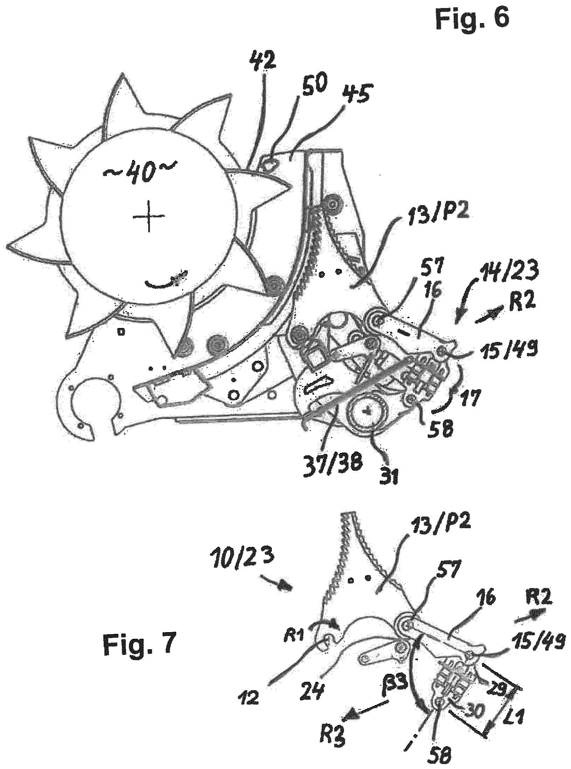

Figur 6 zeigt das Erntemaschinen-Vorderteil mit dem Kniehebelmechanismus 14 in seiner zweiten Knickstellung 23, Figur 7 wiederum zeigt den freigestellten Kniehebelmechanismus 14 aus Figur 6. Das Schneidmesser 13 befindet sich in einer aus dem Förderkanal 45 ausgeschwenkten Ruheposition P2. Das Schneidmesser ist nicht etwa langsam vom Fremdkörper 50 aus dem Förderkanal 45 gedrückt, sondern vielmehr von der sich nach Überschreiten der Totpunktlage 20 schlagartig entladenen Energie des zuvor komprimierten Federelements 19 aus dem Förderkanal 45 herauskatapultiert worden.

Die schiefe Ebene 28 reicht somit soweit, dass der Kniehebel 16 und mit ihm die Kniehebel-Drehachse 15 bei kleinster zusätzlicher Krafteinleitung in der Stellung Totpunktlage 20 über den Totpunkt hinaus geführt wird. Das Auslösen der Messersicherung wird somit bewirkt durch eine Richtungsänderung der Kraftkomponente FN: Bei einer auf das Schneidmesser einwirkenden Kraft, die ein Drehmoment M bewirkt, welches eine Kraft FR auf den Kniehebelmechanismus (14) verursacht, die kleiner als eine vordefinierte Kraft F1 ist, weist die auf den Kniehebelmechanismus 14 ausgeübte resultierende Kraft FR eine in Andrück-Knickrichtung R3 wirkende Kraftkomponente FN auf. Bei weiter ansteigender Krafteinwirkung reduziert sich die Größe der Kraft FN.

Erreicht die auf den Kniehebelmechanismus 14 einwirkende Kraft FR den vordefinierten Wert F1, beträgt die in Richtung R2 oder R3 wirkende Knickkraft FN Null Newton. Steigt die auf das Schneidmesser 13 einwirkende Kraft und damit das Drehmoment M sowie die auf den Kniehebelmechanismus 14 wirkende Kraft FR weiter an, kehrt sich die Wirkrichtung der Kraftkomponente FN aus Andrück-Richtung R3 in Ausweich-Knickrichtung R2 um und das Schneidmesser 13 wird aus der Arbeitsposition P1 in die Ruheposition P2 geschwenkt.

Bei dem in den Figuren 2 bis 7 dargestellten Ausführungsbeispiel reduziert sich der Winkel zwischen den beiden Kniehebeln 16 und 17 zunächst vom in der ersten Knickstellung 21 vorliegenden Ausgangswert, der größer als 180° ist (überstreckte Stellung) auf 180° (Totpunktstellung) und nach Überschreiten der Totpunktstellung bei Übergang in eine zweite Knickstellung 23 auf unter 180°. Das Federelement 19 und die aus dessen Kompression resultierende Gegenkraft zum Kraftvektor FR drückt im Moment des Auslösens nicht mehr in Richtung R3 und sowie gegen das Schneidmesser 13 in dem Bestreben, dieses im Förderkanal 45 zu halten. Das Federelement 19 lässt den Kniehebelmechanismus 14 vielmehr widerstandslos um die Kniehebel-Drehachse 15 in Richtung R2 einknicken. Die eingeknickte Stellung des Kniehebelmechanismus 14 stellt somit die zweite Knickstellung 23 dar in der das Federelement 19 in seine entspannte Ausgangslage zurückgekehrt und der Kniehebel 17 seine ursprüngliche Länge L1 wieder eingenommen hat. Der in der ersten Knickstellung 21 vorhandene Winkel ß1 hat nach Auslösen der Messersicherung zu einem Winkel ß3 ist in der 2. Knickstellung reduziert, der deutlich kleiner als 180° ist, im Ausführungsbeispiel beträgt er ca. 100°.

In Figur 6 ist weiterhin dargestellt, dass sich die Position des im Erntegut (nicht dargestellt) befindlichen Fremdkörpers 50 relativ zum Förderzinken 42 nicht verändert hat.

Der Fremdkörper 50 ist nach Ausschwenken des Schneidmessers 13 zusammen mit dem Erntegut weiter in Richtung Laderaum 53 gefördert worden, da das aus dem Förderkanal 45 ausgewichene Schneidmesser 13 den hierfür erforderlichen Raum frei gemacht hat. Damit soll veranschaulicht werden, dass der Fremdkörper 50 nach Kontaktierung des Schneidmessers 13 nicht an dessen Schneidkante entlang geschabt ist, sondern vielmehr lediglich dafür gesorgt hat, das Schneidmesser 13 aus dem Förderkanal 45 zu katapultieren.

Um das Schneidmessers 13 entgegengesetzt zur Richtung R1 aus der Ruheposition P2 in den Förderkanal 45 und damit in die Arbeitsposition P1 zurückzuschwenken, muss das Federelement 19 nicht komprimiert werden, solange keine Gegenkraft gegen das Schneidmesser 13 drückt. Es reicht aus, wenn eine geringe in Richtung R3 weisende Kraft in den Kniehebelmechanismus 14 eingebracht wird und das Kniehebel-Drehgelenk 49 von dieser Kraft über die Gestrecktstellung 22 zurück in die erste Knickstellung 21 gezogen wird. Im dargestellten Ausführungsbeispiel wird diese Rückstellkraft von einer Spiralfeder 38, die als Rückstellmittel 37 dient, eingebracht. Die Spiralfeder 38 ist an ihrem einem Ende in der Nähe des Kniehebel-Drehgelenks 49 an den Kniehebelmechanismus 14 gekoppelt und an ihrem anderen Ende an die Trägerstruktur 55. Alternativ zu einer Spiralfeder kann auch eine Rollfeder, ein Gummi oder ein elastisches Band vorgesehen sein.

Die Figuren 10 bis 13 veranschaulichen die erfindungsgemäße Schneidmesser-Überlastsicherung 10. Der Winkel ß1 zwischen den beiden Kniehebeln ist größer als 180° und die beiden Kniehebel befinden sich in Arbeitsposition P1 in einer überstreckten Stellung.
Der Winkel ß1 in der ersten Knickstellung 21 kann somit größer als 180° sein.

Der Kniehebelmechanismus 14 wird aus einer in Arbeitsposition P1 vorgesehenen ersten Knickstellung 21 über eine Totpunktlage in die Ruheposition P2 und damit in eine zweite Knickstellung 23 überführt. Die Totpunktlage 20 befindet sich in einer Gestrecktstellung der beiden Kniehebel 16 und 17.Die Totpunktlage wird dadurch definiert, dass die Knickkraft in Totpunktlage Null Newton beträgt. Die Drehachse 15 des Kniehebel-Drehgelenks 49 liegtin Totpunktlage auf der Geraden 39.

Die Figuren 10 bis 13 veranschaulichen weiterhin die im Kniehebelmechanismus wirkenden Kräfte bei jeweils unterschiedlicher Belastung des Schneidmessers13. Im Ernteeinsatz übt das vom Rotor 40 (vgl. Fig. 1) vor das Schneidmesser 13 geförderte Erntegut eine Kraft FE auf das Schneidmesser 13 aus. In den Figuren 10 bis 12 ist die Kraft FE in Form kleiner Kraftvektoren angedeutet, die das Schneidmesser 13 an dessen Schneidkante beaufschlagen. Dargestellt ist weiterhin ein im Erntegut befindlicherer Fremdkörper 50 (vgl. auch Fig. 2 und Fig. 4), der eine Kraft FFK auf das Schneidmesser ausübt. Die Kräfte FFK und FE bewirken gemeinsam das Drehmoment M um die Drehachse 12 des Schneidmessers 13. Das Drehmoment M überträgt eine Kraft FR auf den Kniehebelmechanismus. Die Größe der Kraft FR ist somit abhängig von der Größe des Drehmoments M bzw. den das Drehmoment M bewirkenden Kräften FFK und FE.

Fig. 10 zeigt schematisch einen ersten Zustand, bei dem die auf den Kniehebelmechanismus 14 einwirkende Kraft FR kleiner ist als die zum Auslösen der Schneidmesser-Überlastsicherung 10 vordefinierte Kraft F1.

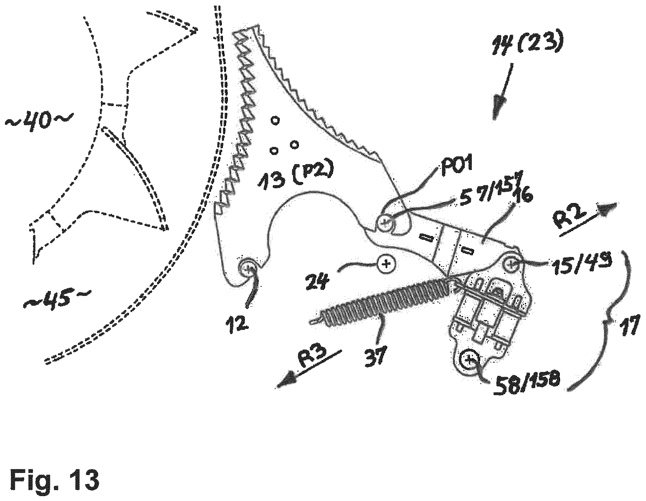

Soweit ein Rückstellmittel 37 in Form einer Rückholfeder vorgesehen ist (in Fig. 13 angedeutet), übt diese im Kniehebel-Drehgelenk 49 eine zusätzliche in Richtung R3 weisende Kraft aus. Diese gegebenenfalls vorhandene Rückstellkraft kann bei der Konzeption der Bauteile und Vorwahl, beziehungsweise Vordefinition, der Auslösekraft F1 einbezogen und mitberücksichtigt werden, so dass die Rückstellkraft der Rückstellfeder keinen störenden Einfluss auf das Auslösen der Schneidmesser-Überlastsicherung 10 hat.

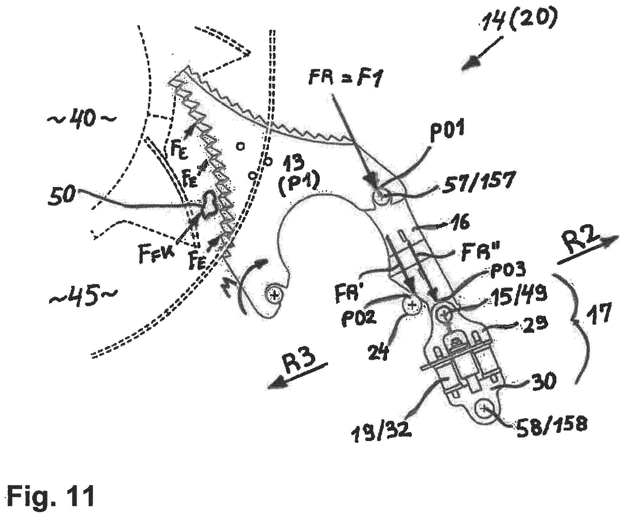

Fig. 11 zeigt einen zweiten Zustand, bei dem die auf den Kniehebelmechanismus 14 einwirkende Kraft FR der vordefinierte Auslösekraft F1 entspricht. Die über das Drehmoment M in den Kniehebelmechanismus 14 eingeleitete Kraft FR kann in den Punkten P02 als Kraft FR' und im Punkt P03 als Kraft FR" bezeichnet werden. Das System befindet sich in Totpunktlage 20. In dieser Position wird die komplette Kraft FR als Kompressionskraft in den Federhebel 17 eingeleitet und komprimiert das Federelement 19.

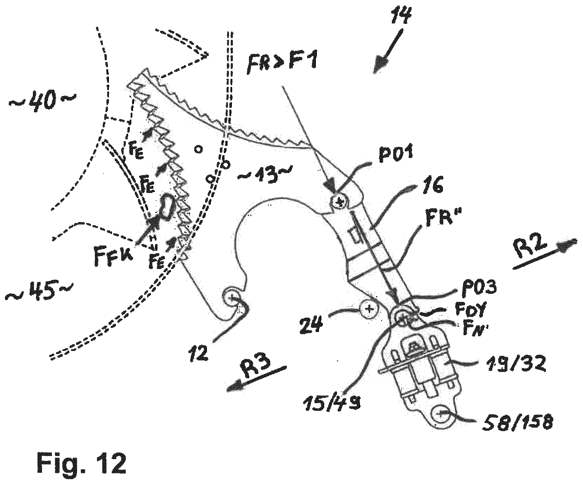

Fig. 12 zeigt einen dritten, Zustand, bei dem die auf den Kniehebelmechanismus 14 einwirkende Kraft FR nochmals angestiegen ist und die Größe der vordefinierten Auslösekraft F1 überschritten hat. Dieser dritte Zustand ist instabil, geht also ohne weiteres Zutun in den in Figur 13 dargestellten vierten Zustand über. Die Kraft FR hat nun kein Gegenlager mehr im Punkt P02 und wird in diesem Punkt nicht abgestützt. Die Kraft FR wird vielmehr als Kraft FR" auf den Punkt P03 und das Kniehebel-Drehgelenk 49 übertragen und weist eine in Ausweich-Knickrichtung R2 weisende Kraftkomponente FDY auf. Ist kein Rückstellmittel 37 vorgesehen, beziehungsweise wird keine durch ein Rückstellmittel in Richtung R3 wirkende Kraft auf das Kniehebel-Drehgelenk 49 übertragen, so reicht eine minimale in Richtung R2 weisende Kraftkomponente FDY aus, um die Schneidmesser-Überlastsicherung 10 auszulösen. Der Auslösevorgang wird unterstützt durch das Federelement 19, das durch die Kompressionskraft FK vorgespannt worden ist und sich bei Überschreiten der Totpunktlage 20 entspannt. Die im Federelement 19 gespeicherte Energie wird dabei schlagartig freigesetzt und das Schneidmesser in die Ruheposition P2 katapultiert.

Fig. 13 zeigt einen vierten Zustand, bei dem das Schneidmesser 13 aus dem Förderkanal herausgeschenkt worden ist und sich in Ruheposition P2 befindet. Weder Erntegut noch ein Fremdkörper belasten das Schneidmesser 13. Soweit kein Rückstellmittel 37 vorgesehen ist wird um die Schneidmesser-Drehachse 12 kein Drehmoment ausgeübt. Ist ein Rückstellmittel 37, beispielsweise in Form einer im Bereich der Kniehebel-Drehgelenks 49 am Kniehebelmechanismus 14 angreifenden Spiralfeder vorgesehen, so wird ein Drehmoment um die Schneidmesser-Drehachse 12 ausgeübt, welches das Schneidmesser 13 in die Arbeitsposition P1 zurückschwenkt. In Fig. 13 ist ein solches Rückstellmittel beispielhaft und andeutungsweise dargestellt. Zu erkennen ist, dass in dem in Figur 13 gezeigten vierten Zustand im Punkt P01 keine Kraft anliegt. Auch im Kniehebel-Drehgelenk 49 und im Federelement 19 liegt keine Kraft an. Der ganze Kniehebelmechanismus befindet sich vielmehr in einer entspannten Lage. Um das Kniehebel-Drehgelenk 49 in Richtung R3 zu schwenken müssen lediglich die systemimmanenten Reibungskräfte, bzw. soweit Bauteile entgegen nach oben bewegt werden müssen, die durch die Schwerkraft dieser Teile ausgeübte Kraft.

### Bezugszeichenliste

| | | | |
|---|---|---|---|
| 10 | Schneidmesser-Überlastsicherung | 41 | Tragrohr |
| 11 | Schneidwerk | 42 | Förderzinken |
| 12 | Schneidmesser-Drehachse | 43 | Hüllzylinder |
| 13 | Schneidmesser | 44 | Förderwanne |
| 14 | Kniehebelmechanismus | 45 | Förderkanal |
| 15 | Kniehebel-Drehachse | 46 | Drehbolzen |
| 16 | Kniehebel | 47 | Mutter |
| 17 | Kniehebel | 48 | Scheibe |
| 18 | Führungselement | 49 | Kniehebel-Drehgelenk |
| 19 | Federelement | 50 | Fremdkörper |
| 20 | Totpunktlage | 51 | Pick-up |
| 21 | erste Knickstellung | 52 | Förderzinkenspitze |
| 22 | Gestrecktstellung | 53 | Laderaum |
| 23 | zweite Knickstellung | 54 | Messerträger |
| 24 | Anschlag | 55 | Trägerstruktur |
| 25 | Kontur | 56 | Drehachse (von 11) |
| 26 | - | 57 | Drehgelenk (von 16) |
| 27 | Kontaktbereich | 58 | Drehgelenk (von 17) |
| 28 | schiefe Ebene | 59 | Feder-Haltebolzen |
| 29 | Einzelteil | 60 | Führungsbolzen |
| 30 | Einzelteil | 61 | Trennscheibe |
| 31 | Tragrahmen | 62 | Gewinde |
| 32 | Kunststoffblock | 63 | Vertiefung (in 61) |
| 33 | Einzelfeder | 100 | Erntemaschine |
| 34 | Einzelfeder | 157 | Drehachse (von 57) |
| 35 | Spanneinrichtung | 158 | Drehachse (von 58) |
| 36 | Führungsmittel | | |
| 37 | Rückstellmittel | | |
| 38 | Spiralfeder | | |
| 39 | Gerade | | |
| 40 | Förderrotor | | |
| P1 | Arbeitsposition | | |
| P2 | Ruheposition | | |
| P01 | Kontaktpunkt (von 13 und 16) | | |
| P02 | Kontaktpunkt (von 24 und 16) | | |
| P03 | Kontaktpunkt (von 16 und 17) | | |
| F | Kraft (auf 14 wirkend) | | |
| F1 | Kraft (Auslösekraft) | | |
| FE | Kraft (vom Erntegut bewirkt) | | |
| FN | Kraft (Knickkraft) | | |
| FK | Kraft (Kompressionskraft) | | |
| FFK | Kraft (vom Fremdkörper 50 bewirkt) | | |
| FDY | Kraft (in 49 anliegend) | | |
| FR | Kraft (Kraftresultierende in P01) | | |
| FR' | Kraft (Kraftresultiere. in Punkt P02) | | |
| FR" | Kraft (Kraftresultiere. In Punkt P03) | | |
| L1 | Länge | | |
| L2 | Länge | | |
| M | Drehmoment (um 12) | | |
| R1 | Richtung | | |
| R2 | Richtung | | |
| R3 | Richtung | | |
| ß1 | Winkel in 1. Knickstellung 21 | | |
| ß2 | Winkel in Gestrecktstellung 22 | | |
| ß3 | Winkel in 2. Knickstellung 23 | | |

## Patentansprüche

1. Kniehebelmechanismus (14) umfassend zwei um eine Kniehebel-Drehachse (15) schwenkbar aneinander gekoppelte Kniehebel (16, 17), die bei Überschreiten einer vordefinierten, auf den Kniehebelmechanismus (14) einwirkenden, Kraft (F1) aus einer Arbeitsposition (P1) in eine Ruheposition (P2) bewegbar sind sowie weiterhin umfassend einen Anschlag (24) und ein Federelement (19), **dadurch gekennzeichnet, dass** der Anschlag (24) ein Führungselement (18) bildet, welches in Kontakt zu einem Kniehebel (16, 17) steht und der in Kontakt zu dem Anschlag (24) stehende Kniehebel (16, 17) eine Führungsbahn in Form einer schiefen Ebene (28) umfasst, an der der Anschlag (24) entlanggleiten oder rollen kann, so dass Federelement (19) und Anschlag (24) so zusammenwirken, dass bei Überschreiten der vordefinierten Kraft (F1) die Kniehebel-Drehachse (15) über einen Totpunkt (20) bewegt wird und die Position der Kniehebel (16, 17) aus einer ersten Knickstellung (21) in eine zweite Knickstellung (23) wechselt.

2. Schneidmesser-Überlastsicherung (10) für ein Schneidwerk (11) einer Erntemaschine (100) für Halm- und Blattgut, umfassend wenigstens ein um eine Schneidmesser-Drehachse (12) schwenkbares Schneidmesser (13) und einen Kniehebelmechanismus (14) gemäß Anspruch 1, mit welchem bei Überschreiten der vordefinierten Kraft (F1) das Schneidmesser (13) aus einer Arbeitsposition (P1) in eine Ruheposition (P2) bewegbar ist.

3. Schneidmesser-Überlastsicherung (10) nach Anspruch 2, **dadurch gekennzeichnet, dass** eine auf den Kniehebelmechanismus einwirkende Kraft (FR) einen Knickkraftanteil (FN) und einen Kompressionskraftanteil (FK) umfasst und
- bei in Arbeitsposition (P1) befindlichem Schneidmesser (13) der Knickkraftanteil (FN) den Kniehebelmechanismus (14) in Richtung (R3) gegen den Anschlag (24) drückt,
- sich bei größer werdender Kraft (FR) der in Richtung (R3) weisende Knickkraftanteil (FN) reduziert,
- die Kraft (FR) bei Erreichen des vordefinierten Wertes (F1) den Kniehebelmechanismus in die Totpunktlage (20) bewegt, in der eine im Kniehebel-Drehgelenk (49) wirkende Kraft (FDY) oder (FN) Null Newton beträgt,
- die Kraft (FR) bei Überschreiten des vordefinierten Wertes (F1) das Kniehebel-Drehgelenk (49) in Richtung (R2) vom Anschlag weg bewegt, so dass die Totpunktlage (20) überschritten wird und die durch Überschreiten der Totpunktlage (20) ausgelöste Schneidmesser-Überlastsicherung (10) das Schneidmesser (13) in Ruheposition (P2) bewegt.

4. Schneidmesser-Überlastsicherung (10) nach Anspruch 2 oder 3, **dadurch gekennzeichnet, dass** der Kniehebelmechanismus (14) beim Wechsel aus der Arbeitsposition (P1) in die Ruheposition (P2) aus der ersten Knickstellung (21) über eine Gestrecktstellung (22) in die zweite Knickstellung (23) wechselt.

5. Schneidmesser-Überlastsicherung (10) nach einem der Ansprüche 2 bis 4, **dadurch gekennzeichnet, dass** die Position des Anschlags (24) gegenüber dem Kniehebel (16) einstellbar ist.

6. Schneidmesser-Überlastsicherung (10) nach einem der Ansprüche 2 bis 5, **dadurch gekennzeichnet, dass** der Kniehebel (16) einen Kontaktbereich (27) umfasst der als schiefe Ebene (28) ausgebildet ist.

7. Schneidmesser-Überlastsicherung (10) nach einem der Ansprüche 2 bis 6, **dadurch gekennzeichnet, dass** wenigstens ein Kniehebel (16, 17) zwei Einzelteilen (29, 30) umfasst, die über das Federelement (19) aneinander gekoppelt sind, so dass die Länge (L1; L2) des Kniehebels (17) von der Größe der Kraft (FR) und damit von der Größe der auf das Federelement (19) einwirkenden Kraft (FK) abhängig ist.

8. Schneidmesser-Überlastsicherung (10) nach einem der Ansprüche 2 bis 7, **dadurch gekennzeichnet, dass** das Federelement (19) zwischen dem Schneidmesser (13) und dem Kniehebel (16) oder zwischen einem mit dem Kniehebel (17) verbundenen Tragrahmen (31) und dem Kniehebel (17) angeordnet ist.

9. Schneidmesser-Überlastsicherung (10) nach einem der Ansprüche 2 bis 8, **dadurch gekennzeichnet, dass**:
- der Kniehebel (16) an seiner der Kniehebel-Drehachse (15) entgegengesetzten Seite ein Drehgelenk (57) mit einer Drehachse (157),
- und der Kniehebel (17) an seiner der Kniehebel-Drehachse (15) entgegengesetzten Seite ein Drehgelenk (58) mit einer Drehachse (158) umfasst,
- die beiden Kniehebel (16, 17) ein gemeinsames Drehgelenk (49) mit der Kniehebel-Drehachse (15) umfassen,
- und wenigstens ein Drehgelenk (49, 57, 58) ein Federelement (119) umfasst, welches bei Einwirken einer Kraft (FR) auf den Kniehebelmechanismus (14) elastisch verformt wird.

10. Schneidmesser-Überlastsicherung (10) nach einem der Ansprüche 2 bis 9, **dadurch gekennzeichnet, dass** als Federelement (19) ein elastischer Kunststoffblock (32) vorgesehen ist.

11. Schneidmesser-Überlastsicherung (10) nach einem der Ansprüche 2 bis 10, **dadurch gekennzeichnet, dass** das Federelement (19) wenigstens zwei Einzelfedern (33, 34) umfasst.

12. Schneidmesser-Überlastsicherung (10) nach einem der Ansprüche 2 bis 11, **dadurch gekennzeichnet, dass** eine Spanneinrichtung (35) vorgesehen ist um das Federelement (19) vorzuspannen.

13. Schneidmesser-Überlastsicherung (10) nach einem der Ansprüche 2 bis 12, **dadurch gekennzeichnet, dass** das Federelement (19) an ein Führungsmittel (36) gekoppelt ist, so dass ein seitliches Ausbrechen des Federelementes (19) unter Lasteinwirkung verhindert wird.

14. Schneidmesser-Überlastsicherung (10) nach einem der Ansprüche 2 bis 13, **dadurch gekennzeichnet, dass** ein Rückstellmittel (37) vorgesehen ist, welches das Schneidmesser aus der Ruheposition (P2) in die Arbeitsposition (P1) bewegt.

15. Erntemaschine (100) für Halm- und Blattgut, umfassend wenigstens eine Schneidmesser-Überlastsicherung (10) nach einem der Ansprüche 2 bis 14 oder einen Kniehebelmechanismus nach Anspruch 1.

## Claims

1. A toggle lever mechanism (14) comprising two toggle levers (16, 17) that are coupled to one another and pivotable about a toggle lever rotational axis (15) and which can be moved from an operating position (P1) to a resting position (P2) when a predefined force (F1) acting on the toggle lever mechanism (14) has been exceeded, and further comprising a limit stop (24) and a spring element (19), **characterized in that** the limit stop (24) forms a guide element (18) which is in contact with a toggle lever (16, 17) and the toggle lever (16, 17) contacting the limit stop (24) includes a guide track in the form of an inclined plane (28) along which the limit stop (24) can slide or roll, with spring element (19) and limit stop (24) interacting such that when the predefined force (F1) is exceeded, the toggle lever rotational axis (15) is moved past a dead center point (20) and the position of the toggle levers (16, 17) shifts from a first buckling position (21) to a second buckling position (23).

2. A cutting blade overload protection device (10) for a cutting mechanism (11) of a harvester (100) for leaf and stalk material, comprising at least one cutting blade (13) that is pivotable about a cutting blade rotational axis (12) and a toggle lever mechanism (14) as claimed in claim 1 with which the cutting blade (13) can be moved from an operating position (P1) to a resting position (P2) when a predefined force (F1) has been exceeded.

3. The cutting blade overload protection device (10) as claimed in claim 2, **characterized in that** a force (FR) acting on the toggle lever mechanism comprises a buckle force component (FN) and a compression force component (FK) and
- when the cutting blade (13) is in operating position (P1), the buckle force component (FN) presses the toggle lever mechanism (14) against the limit stop (24) in direction (R3),
- as force (FR) increases, the buckle force component (FN) oriented in direction (R3) is reduced,
- upon attaining the predefined value (F1), force (FR) moves the toggle lever mechanism into the dead center position (20) in which a force (FDY) or (FN) acting in toggle lever swivel joint (49) measures zero Newtons,
- when force (FR) exceeds the predefined value (F1), said force (FR) moves the toggle lever swivel joint (49) away from the limit stop in direction (R2), with the result that the dead center position (20) is passed and the cutting blade overload protection device (10) triggered by the passing of the dead center position (20) moves the cutting blade (13) into resting position (P2).

4. The cutting blade overload protection device (10) as claimed in claim 2 or 3, **characterized in that** when changing from the operating position (P1) into the resting position (P2), the toggle lever mechanism (14) passes out of the first buckling position (21) through a straight position (22) and into the second buckling position (23).

5. The cutting blade overload protection device (10) as claimed in one of the claims 2 to 4, **characterized in that** the position of the limit stop (24) can be adjusted with respect to the toggle lever (16).

6. The cutting blade overload protection device (10) as claimed in one of the claims 2 to 5, **characterized in that** the toggle lever (16) includes a contact area (27) that is configured as an inclined plane (28).

7. The cutting blade overload protection device (10) as claimed in one of the claims 2 to 6, **characterized in that** at least one toggle lever (16, 17) comprises individual components (29, 30) which are coupled to one another by means of the spring element (19) such that the length (L1; L2) of the toggle lever (17) is dependent on the magnitude of force (FR) and thus on the magnitude of the force (FK) acting on the spring element (19).

8. The cutting blade overload protection device (10) as claimed in one of the claims 2 to 7, **characterized in that** the spring element (19) is arranged between the cutting blade (13) and the toggle lever (16) or between a supporting frame (31) connected to the toggle lever (17) and the toggle lever (17).

9. The cutting blade overload protection device (10) as claimed in one of the claims 2 to 8, **characterized in that:**
- the toggle lever (16) comprises at its end opposite the toggle lever rotational axis (15) a swivel joint (57) with a pivot axis (157),
- and the toggle lever (17) comprises at its end opposite the toggle lever rotational axis (15) a swivel joint (58) with a pivot axis (158),
- the two toggle levers (16, 17) include a common swivel joint (49) with the toggle lever rotational axis (15),
- and at least one swivel joint (49, 57, 58) includes a spring element (119), which is elastically deformed when a force (FR) acts on the toggle lever mechanism (14).

10. The cutting blade overload protection device (10) as claimed in one of the claims 2 to 9, **characterized in that** an elastic plastic block (32) is provided as the spring element (19).

11. The cutting blade overload protection device (10) as claimed in one of the claims 2 to 10, **characterized in that** the spring element (19) includes at least two individual springs (33, 34).

12. The cutting blade overload protection device (10) as claimed in one of the claims 2 to 11, **characterized in that** a tensioning device (35) is provided in order to preload the spring element (19).

13. The cutting blade overload protection device (10) as claimed in one of the claims 2 to 12, **characterized in that** the spring element (19) is coupled to a guide means (36) in order to prevent the spring element (19) from breaking out laterally when subjected to a load.

14. The cutting blade overload protection device (10) as claimed in one of the claims 2 to 13, **characterized in that** a restoring means (37) is provided which moves the cutting blade from the resting position (P2) into the operating position (P1).

15. Harvester (100) for leaf and stalk material, comprising at least one cutting blade overload protection device (10) as claimed in one of the claims 2 to 14 or a toggle lever mechanism as claimed in claim 1.

## Revendications

1. Mécanisme de genouillère (14), comprenant deux leviers de genouillère (16, 17) accouplés l'un à l'autre de manière à pouvoir pivoter autour d'un axe de rotation de levier de genouillère (15), qui, lors du dépassement d'une force prédéfinie (F1) agissant sur le mécanisme de genouillère (14), peuvent être déplacés d'une position de travail (P1) dans une position de repos (P2) et comprenant en outre une butée (24) et un élément de ressort (19), **caractérisé en ce que** la butée (24) forme un élément de guidage (18) qui est en contact avec un levier de genouillère (16, 17) et le levier de genouillère (16, 17) en contact avec la butée (24) comprend une piste de guidage sous forme de plan oblique (28) le long de laquelle peut glisser ou rouler la butée (24) de telle sorte que l'élément de ressort (19) et la butée (24) coopèrent de telle sorte que lors du dépassement de la force prédéfinie (F1), l'axe de rotation de levier de genouillère (15) soit déplacé au-delà d'un point mort (20) et que la position des leviers de genouillère (16, 17) change d'une première position de flexion (21) à une deuxième position de flexion (23).

2. Système de protection contre les surcharges d'une lame de coupe (10) pour un outil de coupe (11) d'une machine de récolte (100) de produits en tiges et en feuilles, comprenant au moins une lame de coupe (13) pouvant pivoter autour d'un axe de rotation de lame de coupe (12) et un mécanisme de genouillère (14) selon la revendication 1, avec lequel, en cas de dépassement de la force prédéfinie (F1), la lame de coupe (13) puisse être déplacée d'une position de travail (P1) à une position de repos (P2).

3. Système de protection contre les surcharges d'une lame de coupe (10) selon la revendication 2, **caractérisé en ce qu'**une force (FR) agissant sur le mécanisme de genouillère comprend une proportion de force de flexion (FN) et une proportion de force de compression (FK) et
- lorsque la lame de coupe (13) se trouve dans la position de travail (P1), la proportion de force de flexion (FN) presse le mécanisme de genouillère (14) dans la direction (R3) contre la butée (24),
- la proportion de force de flexion (FN) orientée dans la direction (R3) diminue au fur et à mesure de l'augmentation de la force (FR),
- la force (FR), une fois que la valeur prédéfinie (F1) est atteinte, déplace le mécanisme de genouillère dans la position de point mort (20) dans laquelle une force (FDY) ou (FN) agissant dans l'articulation pivotante de la genouillère (49) vaut zéro Newton,
- la force (FR), une fois que la valeur prédéfinie (F1) est dépassée, déplace l'articulation pivotante de la genouillère (49) dans la direction (R2) à l'écart de la butée de telle sorte que la position de point mort (20) soit dépassée et que la protection contre les surcharges de la lame de coupe (10) déclenchée par le dépassement de la position de point mort (20) déplace la lame de coupe (13) dans la position de repos (P2).

4. Système de protection contre les surcharges d'une lame de coupe (10) selon la revendication 2 ou 3, **caractérisé en ce que** le mécanisme de genouillère (14), lors de la transition de la position de travail (P1) à la position de repos (P2), passe de la première position de flexion (21) par le biais d'une position étirée (22) dans la deuxième position de flexion (23).

5. Système de protection contre les surcharges d'une lame de coupe (10) selon l'une quelconque des revendications 2 à 4, **caractérisé en ce que** la position de la butée (24) peut être ajustée par rapport au levier de genouillère (16).

6. Système de protection contre les surcharges d'une lame de coupe (10) selon l'une quelconque des revendications 2 à 5, **caractérisé en ce que** le levier de genouillère (16) comprend une région de contact (27) qui est réalisée sous forme de plan oblique (28).

7. Système de protection contre les surcharges d'une lame de coupe (10) selon l'une quelconque des revendications 2 à 6, **caractérisé en ce qu'**au moins un levier de genouillère (16, 17) comprend deux parties individuelles (29, 30) qui sont accouplées l'une à l'autre par le biais de l'élément de ressort (19) de telle sorte que la longueur (L1 ; L2) du levier de genouillère (17) dépende de l'intensité de la force (FR) et par conséquent de l'intensité de la force (FK) agissant sur l'élément de ressort (19).

8. Système de protection contre les surcharges d'une lame de coupe (10) selon l'une quelconque des revendications 2 à 7, **caractérisé en ce que** l'élément de ressort (19) est disposé entre la lame de coupe (13) et le levier de genouillère (16) ou entre un cadre de support (31) connecté au levier de genouillère (17) et le levier de genouillère (17).

9. Système de protection contre les surcharges d'une lame de coupe (10) selon l'une quelconque des revendications 2 à 8, **caractérisé en ce que** :
- le levier de genouillère (16) comprend, au niveau de son côté opposé à l'axe de rotation de genouillère (15), une articulation pivotante (57) avec un axe de rotation (157),
- et le levier de genouillère (17) comprend, au niveau de son côté opposé à l'axe de rotation de genouillère (15), une articulation pivotante (58) avec un axe de rotation (158),
- les deux leviers de genouillère (16, 17) comprennent une articulation pivotante commune (49) avec l'axe de rotation de genouillère (15),
- et au moins une articulation pivotante (49, 57, 58) comprend un élément de ressort (119) qui est déformé élastiquement lors de l'action d'une force (FR) sur le mécanisme de genouillère (14).

10. Système de protection contre les surcharges d'une lame de coupe (10) selon l'une quelconque des revendications 2 à 9, **caractérisé en ce que** l'on prévoit en tant qu'élément de ressort (19) un bloc en plastique élastique (32).

11. Système de protection contre les surcharges d'une lame de coupe (10) selon l'une quelconque des revendications 2 à 10, **caractérisé en ce que** l'élément de ressort (19) comprend au moins deux ressorts individuels (33, 34).

12. Système de protection contre les surcharges d'une lame de coupe (10) selon l'une quelconque des revendications 2 à 11, **caractérisé en ce qu'**il est prévu un dispositif de tensionnement (35) pour précontraindre l'élément de ressort (19).

13. Système de protection contre les surcharges d'une lame de coupe (10) selon l'une quelconque des revendications 2 à 12, **caractérisé en ce que** l'élément de ressort (19) est accouplé à un moyen de guidage (36) de manière à empêcher un détachement latéral de l'élément de ressort (19) sous l'effet d'une charge.

14. Système de protection contre les surcharges d'une lame de coupe (10) selon l'une quelconque des revendications 2 à 13, **caractérisé en ce qu'**un moyen de rappel (37) est prévu, lequel déplace la lame de coupe hors de la position de repos (P2) dans la position de travail (P1).

15. Machine de récolte (100) pour des produits en tiges et en feuilles, comprenant au moins un système de protection contre les surcharges de la lame de coupe (10) selon l'une quelconque des revendications 2 à 14 ou un mécanisme de genouillère selon la revendication 1.
